# EUROPEAN PATENT SPECIFICATION

(11) **EP 3 729 970 B1**
(45) Date of publication and mention of the grant of the patent: **28.09.2022**
(21) Application number: 19855100.4
(22) Date of filing: 09.08.2019
(51) Int. Cl.: A23L 33/21, A23L 7/122, A23L 7/161, A23L 7/196, A23L 19/00, A23P 20/10, A21D 13/24, A21D 13/26, A21D 13/28, A23L 27/00, A23L 7/174

(54) **SOLID FOOD**
FESTES NAHRUNGSMITTEL
ALIMENT SOLIDE

(30) Priority: 29.08.2018 JP 2018160396
(43) Date of publication of application: 28.10.2020
(73) Proprietor: Mizkan Holdings Co., Ltd., Handa-shi, Aichi 475-8585 (JP)
(72) Inventor: TAKEUCHI, Minoru, Handa-shi, Aichi 475-8585 (JP)
(74) Representative: Mewburn Ellis LLP
(86) International application number: PCT/JP2019/031590
(87) International publication number: WO 2020/045051

(56) References cited:
- EP-A1- 1 782 698
- WO-A1-03/007736
- WO-A1-2004/010793
- WO-A1-2017/078519
- WO-A1-2019/163857
- JP-A- 2004 305 134
- JP-A- 2007 130 018
- JP-A- 2014 512 833
- US-A1- 2006 263 496
- US-A1- 2010 092 620
- US-A1- 2012 288 598
- Anonymous: "BIOKURA", Organic Press, 6 June 2016 (2016-06-06), XP055696800, Retrieved from the Internet: URL:https://www.organic-press.com/topics/b iokura_news05
- "Made Good granola mini pack apple cinnamon- Introduction of energy bar product", A Technical Journal on Food Chemistry and Chemicals, vol. 32, no. 3, 2016, pages 34-35, XP009521946, ISSN: 0911-2286
- Anonymous: "ZENB initiative", MIZKAN NEWSRELEASE R18036, 28 February 2019 (2019-02-28), XP055696804, Retrieved from the Internet: URL:https://www.mizkan.co.jp/company/newsr elease/2018news/pdf/R18036.pdf [retrieved on 2019-10-23]

## Description

### TECHNICAL FIELD

The present invention relates to a solid food and a method for manufacturing the same.

### BACKGROUND ART

In recent years, the usefulness of foods prepared from plant materials, such as cereal and granola, has been being recognized to compensate for a disturbance of eating habits centered on meat from the viewpoint of being capable of easily correcting it.

Foods such as cereal and granola are simple foods in a form of suitable for long-term storage made by processing for easy eating of grain, such as corn, oats, wheat, barley, and rice, by cooking, for example, squashing the grain and forming into thin pieces (flakes), puffing (expanding), or mixing and forming into a sheet and then crushing it and are excellent foods because it has an excellent house holding property and it can be easily prepared as a menu.

In the eating method therefor, in general, they are often eaten by mixing with foods having liquid fluidity (hereinafter, also referred to as liquid food to be mixed) mainly exemplified by dairy products, such as milk and yogurt.

However, when cereal, granola, or the like is eaten by mixing with a dairy product, such as milk or yogurt, the cereal, granola, or the like is at first too hard to eat but absorbs moisture and gets soft with time and loses its chewy texture and filling in eating. Thus, the problem was that the palatability is significantly reduced associated with the change in texture.

In seasoned cereal, granola, or the like, the taste is not transferred to the dairy product, such as milk or yogurt, at first, and there is not integrated impression in taste of the cereal or granola and the dairy product, and discomfort like eating them separately is felt. However, the cereal, granola, or the like absorbs moisture and gets soft with time, and most of the seasoned components are transferred to the dairy product to season the liquid food to be mixed, but the solid food becomes tasteless, resulting in no integrated impression in taste as a whole. Thus, the problem was that the palatability is significantly reduced associated with the change in taste.

Examples of solutions to the problem of a reduction in palatability associated with changes in texture and taste include the followings. Patent Literature 1 discloses a technique for obtaining corn flakes that can maintain the crispy texture in a liquid food to be mixed by spraying syrup having a sugar content of 60% to 80% and an oil content of 3% to 10% to corn flakes in an amount of 60% to 90 mass% and drying with hot air until the water content decreases to 3% or less. However, the effect of maintaining the texture is within 5 minutes, and the problem is that the effect of maintaining the crispy texture is too short in time compared to the time taken for eating. Patent Literature 2 discloses a technique about a low-salt cereal food modifier preparation that is a cereal food having a salt content of less than 2.5 g for 100 g of dry cereal raw material by containing arginine and/or an arginine salt in an amount of 0.01 to 1 g in terms of arginine for 100 g of the dry cereal raw material to provide a method for manufacturing a cereal food having improved texture and a cereal food modifier preparation. However, this technique also had the following problem: the effect of maintaining the texture is within 3 minutes and the effect of maintaining the crispy texture is too short in time compared to the time taken for eating. Furthermore, these literatures do not describe or suggest integrated impression in taste of cereal and a liquid food to be mixed in the liquid food to be mixed, and there is room for consideration regarding improvement in taste.

In contrast, Patent Literature 3 discloses a technique relating to new baked confectionery in which a combination of a cereal part and a meringue part is baked for the purpose of providing new baked confectionery that can be enjoyed with the texture of cereal by dissolving it in milk or other beverages. It is described that in this technique, the meringue part is easily dissolved in a beverage when the confectionery is put in the beverage by combining the cereal part and the meringue part, and it is proposed that the flavor of the meringue part dissolves out into the liquid food to be mixed to improve the taste. However, technically, it merely bakes a combination of the cereal part and the meringue part, no technical device for the texture of the cereal part was described or suggested, and there is room for consideration regarding maintaining of the texture.

Patent Literature 4 discloses a technique of stabilizing cereal food dispersion and preventing uneven distribution by delaying the water absorption time of the cereal food through the use of a thickener together with the cereal food to adjust the viscosity when milk added to 50 mPa·s to 5,000 mPa·s at 10°C to 40°C and further imparting viscosity to milk for the purpose of providing a cereal food that is prepared at eating by adding milk thereto and maintains favorable texture even if mixed with milk without causing rapid soaking of the solution into the cereal food and getting soft and further maintains good appearance due to uniform dispersion of the cereal in the solution. It is described that in this technique, since the thickener on the surface of the cereal food is moderately dissolved, infiltration of the liquid food to be mixed into the cereal food is prevented to maintain the texture of both moderate smoothness and hardness for a long time and that the thickener dissolves out into the liquid food to be mixed to impart viscosity to the liquid to prevent uneven distribution of the cereal food in the liquid food to be mixed. However, the verification of maintaining the texture is limited to 1 minute after stirring of the cereal food and milk, whereas the maintained effect for a long time is unclear. Regarding the improvement of the taste, although it is presumed that the integrated impression of the cereal food to which the thickener attached and the liquid food to be mixed provided with viscosity is present by imparting viscosity to the liquid food to be mixed in the point of texture (physical property), there is room for further consideration regarding imparting of integrated impression in taste.

The following techniques that apply the effects of dietary fibers to the above problems are disclosed. Patent Literature 5 discloses a technique of drying a fruit containing 0.7 g or more of insoluble dietary fibers, preparing a dried fruit by adding glycerol to the fruit, and mixing the dried fruit with a cereal food for the purpose of providing a dry food mixture that prevents the cereal from becoming moist and has good texture. It is described that consequently, the sugar in the dried fruit is hard to peel off due to the barrier of the insoluble dietary fibers stretched inside and does not transfer to the cereal to maintain the crispy texture of the cereal. However, it is necessary to coat them with sugar for preventing transfer of glycerol to the cereal, the purpose is not improvement of the taste, and use of a dried fruit containing glycerol is indispensable. Thus, there is a problem of poor versatility.

Patent Literature 6 discloses a technique for manufacturing puffed food, such as a cereal food having soft texture, by using a technique of directly puffing a raw material mainly composed of a starchy material and/or a material containing dietary fibers with a screw type extruder. It is described that in this technique, the origin of the dietary fibers is selected from, for example, defatted soybean, soybean curd refuse, soybean seed coats, apple pomace, corn dietary fibers, and whole wheat and that the average particle diameter of the dietary fibers is preferably from 10 to 150 µm. However, the role of the dietary fibers in this technique is to increase the absolute amount by using foodstuffs including the disposal parts thereof, to obtain a diet effect by reducing the amount of oil absorbed at the time of frying in the processing, and to adjust the texture of the foodstuff after puffing treatment to a preferable range by an appropriate particle size, and the technique is not a method for maintaining the crispy texture of a cereal food or imparting integrated impression in taste.

US 2012/0288598 A1 concerns a method of fortifying a processed cereal piece with external fiber. US 2010/0092620 A1 concerns a compound coating having a very high level of dietary fiber from about 35% to about 75% by weight, and a particle size of about 35 microns or less. WO 2017/078519 A1 concerns high dietary fiber cereal bars having a low weight percentage of fructooligosaccharides and/or inulin while still having acceptable organoleptic properties. EP 1782698 A1 concerns a low-calorie whole grain cereal bar that includes whole grain and binder in amounts effective for providing a cereal bar with at least about 15 weight % or more whole grain, at least about 5 weight % or more protein, about 5 weight % or more fiber, and at least 120 or less calories per 28 gram bar. WO 03/007736 A1 concerns a moisture-resistant coating of a continuous fat layer in which 1-15 % (m/m) water-insoluble and fat-insoluble particles having an average particle diameter of 1-100 µm are present.

### CITATION LIST

### PATENT LITERATURES

Patent Literature 1: JP-A-hei 8-196226
Patent Literature 2: JP-A-2015-109807
Patent Literature 3: JP-A-2007-202418
Patent Literature 4: JP-A-2016-171767
Patent Literature 5: JP-A-2017-6005
Patent Literature 6: JP-A-2004-305134

### SUMMARY OF THE INVENTION

### PROBLEM TO BE SOLVED

As described above, in a solid food such as cereal or granola, it has been demanded to simultaneously achieve the maintaining of crispy texture for a long time at eating and the impartation of integrated impression in taste with the liquid food to be added which is eaten over these.

It is an object of the present invention to provide a solid food which does not get soaked and maintains crispy texture for a long time at eating even if mixed with a liquid food to be added, imparts integrated impression in taste with the liquid food to be added, and has improved palatability as a single meal such as appearance and flavor.

### SOLUTION TO PROBLEM

As a result of extensive studies in view of the above circumstances, the present inventors found that the above problems can be easily solved at the same time by coating a fat/oil composition containing a finely pulverized product of insoluble dietary fiber on a core food, making a coating amount thereof equal to or larger than a certain amount, and/or coating a fat/oil composition on a core food, and then coating a finely pulverized product of insoluble dietary fiber, thereby completing the present invention.

### ADVANTAGEOUS EFFECT OF THE INVENTION

The present invention provides a solid food which does not get soaked and maintains crispy texture for a long time at eating even if mixed with a liquid food to be added, imparts integrated impression in taste with the liquid food to be added, and has improved palatability as a single meal such as appearance and flavor; and a method of manufacturing the same

### BRIEF DESCRIPTION OF THE DRAWINGS

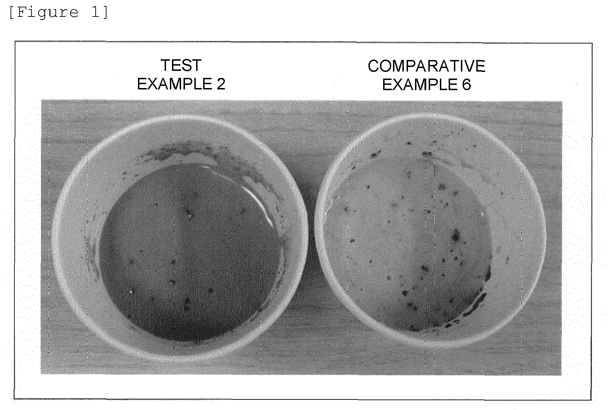

Figure 1 illustrates photographs for comparison of a state of a mixture of a solid food containing a core food (brown rice puff) coated with a finely pulverized matter containing edible and non-edible parts (skin) of beet (Comparative Example 6 in Table 2), to which milk was added, and a state of a mixture of a solid food containing a core food (brown rice puff) coated with an fat/oil composition (almond paste), and further coated with a finely pulverized matter containing both edible and non-edible parts (skin) of beet (Test example 2 in Table 2), to which milk was added.

### DESCRIPTION OF EMBODIMENTS

The present invention relates to a solid food according to claim 1.

### [Core food]

In the present invention, the core food is not particularly limited as long as it has crispy texture, and examples thereof include those prepared by subjecting one or more selected from, for example, grain, potatoes, starches, beans, seeds, vegetables, fruits, mushrooms, algae, and spices to one treatment or combination of treatments selected from processing methods such as drying, pressing, molding, expanding, puffing, baking, roasting, crushing, refining, and frying. For example, the core food is a food that tends to lose its crispiness with time, and examples thereof include baked sweets, such as cookies and rice crackers; roasted foods, such as roasted sesame, beans, and nuts; puffed foods, such as puffs; fried sweets, such as potato chips; dry foods, such as dried potatoes and dried fruits; and molded foods, such as ramune and rakugan. In particular, from the viewpoint of imparting appropriate floatability when eaten by mixing with a beverage as a liquid food to be mixed, the core food is preferably one or more foods selected from the group consisting of grain, beans, vegetables, fruits, and seeds. In addition, the core food is preferably a processed product prepared by puffing treatment of the foodstuff. Furthermore, the solid food of the present invention is preferred because it can have the same effect, even if includes two or more core foods.

### [Surface area and volume of core food]

In the present invention, the surface area of a core food is difficult to measure and is therefore measured as the surface area (cm²) of a virtual rectangular parallelepiped. Specifically, the major axis (cm), the minor axis (cm), and the thickness (cm) of a core food were measured, and the surface area was determined by a computational expression: surface area of virtual rectangular parallelepiped = ((major axis) × ((minor axis) × 2 + (thickness) × 2) + (minor axis) × (thickness) × 2)/100. The volume of the core food in the present invention is preferably 1 mm³ or more and 20 mm³ or less from the viewpoint of eatability.

In the present invention, the ratio of the coating mass by a fat/oil composition described later to the surface area of the core food, (mass/surface area), is 0.1 g or more per 100 cm², preferably 0.4 g or more per 100 cm², in particular, more preferably 0.7 g or more per 100 cm² from the viewpoint of the strength of the crispy texture. On the other hand, the upper limit is not particularly limited, and usually the ratio is preferably 10.0 g or less per 100 cm², more preferably 6.0 g or less per 100 cm², further more preferably 3.5 g or less per 100 cm², and most preferably 2.5 g or less per 100 cm² from the viewpoint of reducing raw material loss.

In addition, the ratio of the coating mass by a finely pulverized product of an edible part and an inedible part of a foodstuff containing an insoluble dietary fiber described later to the surface area of the core food, (mass/surface area), is 0.03 g or more per 100 cm², preferably 0.1 g or more per 100 cm², in particular, more preferably 0.15 g or more per 100 cm² from the viewpoint of the strength of the crispy texture. On the other hand, the upper limit is not particularly limited, and usually the ratio is preferably 10.0 g or less per 100 cm², more preferably 6.0 g or less per 100 cm², further more preferably 4.5 g or less per 100 cm², and most preferably 3.0 g or less per 100 cm² from the viewpoint of reducing raw material loss.

### [Insoluble dietary fibers]

The solid food of the present invention contains a finely pulverized product of an edible part and an inedible part of a foodstuff containing insoluble dietary fibers, wherein the inedible part is one or more selected from the group consisting of a core of corn, a seed and a calyx of paprika, a seed and guts of pumpkin, peel of beet, a stem and a leaf of broccoli, a sheath of green soybean, a calyx of tomato, a stump of spinach, a petiole base of kale, a sheath of pea, a sheath and a seed coat of broad bean, a root apex and a petiole base of carrot, and peel and ends of sweet potato • In the present invention, the term "dietary fibers" means the total of indigestible components in food that is not digested by human digestive enzymes. In addition, in the present invention, the term "insoluble dietary fibers" refers to water-insoluble dietary fibers. Examples of the insoluble dietary fibers include, but not limited to, lignin, cellulose, hemicellulose, chitin, and chitosan. Among the insoluble dietary fibers, lignin, in particular, acid-soluble lignin is a high-molecular phenolic compound and has high water repellency and excellent dispersibility. Accordingly, the water absorption suppressing effect for the core food is more significantly obtained by application of the invention of the present application. From such a viewpoint, lignin, in particular, acid-soluble lignin is preferred as an insoluble dietary fiber.

The solid food of the present invention preferably contains insoluble dietary fibers at a content of a certain level or more. Specifically, the lower limit of the content of the insoluble dietary fibers in the solid food of the present invention is preferably 0.5 mass% or more, more preferably 1.0 mass% or more, and further more preferably 2.0 mass% or more. A content of the insoluble dietary fibers of not lower than the above-mentioned lower limit is preferable because the water absorption suppressing effect for the core food is significantly improved. On the other hand, the upper limit of the content of the insoluble dietary fibers in the solid food of the present invention is not limited and is preferably 20 mass% or less, more preferably 15 mass% or less, and further more preferably 10 mass% or less from the viewpoint of industrial productivity.

The composition of the insoluble dietary fibers in the solid food of the present invention is not limited, and because of the above-described reasons, when the proportion of lignin (in particular, acid-soluble lignin) accounting for the whole insoluble dietary fibers is a certain value or more, the water absorption suppressing effect for the core food is more significantly obtained by application of the present invention. Specifically, the proportion of the dry mass of lignin (in particular, acid-soluble lignin) to the whole insoluble dietary fibers is preferably 5 mass% or more, more preferably 10 mass% or more, and further more preferably 30 mass% or more.

The foodstuffs containing an insoluble dietary fiber will be described later.

The measurement of contents of, for example, water, dietary fibers, insoluble dietary fibers, and all fats/oils in the present invention can use methods commonly used to measure food components. For example, measuring methods in accordance with the methods described in the Standard Tables of Food Composition in Japan can be used. Specifically, food dietary fibers and insoluble dietary fibers can be quantitatively measured by subjecting a composition to a modified Prosky method. Water can be quantitatively measured by subjecting a composition to a reduced pressure heat drying method.

All fats/oils content can be quantitatively measured by subjecting a composition to a Soxhlet extraction method. Furthermore, the value of water activity may be measured using a commercially available water activity measuring apparatus.

### [Foodstuff containing an insoluble dietary fiber]

As described above, the insoluble dietary fibers contained in the solid food of the present invention are derived from a finely pulverized product of an edible part and an inedible part of a foodstuff, wherein the inedible part is one or more selected from the group consisting of a core of corn, a seed and a calyx of paprika, a seed and guts of pumpkin, peel of beet, a stem and a leaf of broccoli, a sheath of green soybean, a calyx of tomato, a stump of spinach, a petiole base of kale, a sheath of pea, a sheath and a seed coat of broad bean, a root apex and a petiole base of carrot, and peel and ends of sweet potato. The content of the insoluble dietary fibers is specifically usually, as a dry mass proportion of the insoluble dietary fibers to the foodstuff, preferably 1 mass% or more, more preferably 3 mass% or more, further more preferably 5 mass% or more, and particularly preferably 10 mass% or more.

Further foodstuffs containing an insoluble dietary fiber include, but not limited to, plant materials, microbial materials, and animal materials. In particular, plant materials are preferred. Examples of the plant material include, but not limited to, vegetables (including potatoes and mushrooms), fruits, spices, algae, grain, seeds, and beans. In particular, it is preferable to select one or more from the group consisting of seeds, grain, beans, vegetables, and fruits. These foodstuffs may be used alone or in combination of two or more thereof. In addition, these foodstuffs may be directly used or may be used after various treatments (for example, drying, heating, harshness removal, peeling, seed removal, ripening, salting, and pericarp processing).

The vegetables may be of any type as long as the edible part and/or the inedible part thereof contains insoluble dietary fibers, and examples thereof include, but not limited to, Japanese radish, carrot, rutabaga, parsnip, turnip, black salsify, sweet potato (e.g., purple sweet potato, which is one of sweet potatoes), cassava, yacon, taro, eddoe, konjac potato, tashiroimo (Tacca leontopetaloides (Polynesian arrowroot)), lotus root, potato, beet (preferably beetroot (beetroot: an improved variety so that the root of beet is edible)), kikuimo (Helianthus tuberosus), arrowhead, shallot, garlic, Japanese leek, lily bulb, dogtooth violet, kale, yam, yamanoimo (Dioscorea japonica), nagaimo (Dioscorea polystachya), onion, asparagus, udo (Aralia cordata), cabbage, lettuce, spinach, Chinese cabbage, rape, Japanese mustard spinach, green pak choi, Chinese chives, negi (Allium fistulosum), nozawana (Brassica rapa L. var. hakabura), fuki (Petasites japonicus), fudanso (Swiss chard), potherb mustard, tomato, eggplant, pumpkin, bell pepper, cucumber, myoga, cauliflower, broccoli, edible chrysanthemum, bitter melon, okra, artichoke, zucchini, sugar beet, tiger nuts, ginger, perilla, Japanese horseradish, paprika, herbs (watercress, coriander, water spinach, celery, tarragon, chives, chervil, sage, thyme, laurel, parsley, mustard greens (mustards), mugwort, basil, oregano, rosemary, peppermint, savory, lemongrass, dill, Japanese horseradish leaves, Japanese pepper leaves, and stevia), western bracken fern, zenmai (Osmunda japonica Thunb.), kudzu, tea plant (tea), bamboo shoot, shiitake mushroom, matsutake mushroom, Jew's ear fungus, maitake mushroom, bracket fungus, oyster mushroom, king trumpet mushroom, enokitake (Flammulina velutipes), shimeji mushroom, honey mushroom, mushroom, butterscotch mushroom, jersey cow mushroom, hatsutake (Lactarius hatsudake), and chichitake (Lactarius volemus). In particular, for example, carrot, pumpkin, tomato, paprika, cabbage, beet (preferably, beetroot), onion, broccoli, asparagus, sweet potato (e.g., purple sweet potato, which is one of sweet potatoes), spinach, and kale are preferred, and carrot, pumpkin, tomato, paprika, beet (preferably, beetroot), broccoli, spinach, kale, and sweet potato (e.g., purple sweet potato, which is one of sweet potatoes) are particularly preferred.

The fruits may be of any type as long as the edible part and/or the inedible part thereof contains insoluble dietary fibers, and examples thereof include, but not limited to, Chinese quince, Chinese gourd pear (white pear, Chinese pear), pear, quince, common medlar, juneberry (Amelanchier canadensis), shipova, apple, American cherry (black cherry, dark cherry), apricot, plum, cherry (sweet cherry), sour cherry, blackthorn, Japanese plum, peach, ginkgo, chestnut, akebia, fig tree, persimmon, blackcurrant, raspberry, kiwifruit, gumi (Elaeagnus), mulberry, cranberry, lingonberry, pomegranate, hardy kiwi, sea buckthorn, currant, jujube, Japanese bush cherry, honeyberry, bilberry, redcurrant, grape, blackberry, blueberry, pawpaw, matsubusa (Schisandra nigra), raspberry, downy cherry, mandarin orange, Kumquat, karatachi (Poncirus trifoliata), olive, Japanese loquat, red bayberry, rakanka (Siraitia grosvenorii), tropical fruits (mango, mangosteen, papaya, cherimoya, atemoya, banana, durian, starfruit, guava, pineapple, acerola, passion fruit, dragon fruit, lychee, and eggfruit), strawberry, watermelon, melon, avocado, miracle fruit, orange, lemon, prune, yuzu, sudachi, grapefruit, bitter orange, and shikuwasa (Citrus depressa). In particular, avocado and apple are preferred.

The algae may be of any type as long as the edible part and/or the inedible part thereof contains insoluble dietary fibers, and examples thereof include, but not limited to, large algae, such as kelp, wakame, laver, green laver, and tengusa (Gelidium amansii); and microalgae, such as green algae, red algae, blue algae, dinoflagellates, and euglena. Specifically, the examples include sea lettuce, blue laver, anaaosa (Ulva australis), sea grape, katashiokusa (Cladophora ohuboana), kubiredsuta (Caulerpa lentillifera), kuromiru (Codium divaricatum), tamamiru (Codium mamillosum), Yuikiri (Acanthopeltis japonica), hitoegusa (green laver, Monostroma nitidum), hiraaonori (green laver, Ulva compressa), fusaiwadsuta (Caulerpa okamurae), bouaonori (green laver, Ulva intestinalis), akamoku (Sargassum horneri), amizigusa (Dictyota dichotoma), arame (Eisenia bicyclis), antokume (Eckloniopsis radicosa), ishige (Ishige okamurae), ichimegasa (Carpomitra costata), iroro (Ishige foliacea), iwahige (Myelophycus simplex), umitoranoo (Sargassum thunbergii), umiuchiwa (Padina arborescens), oobamoku (Sargassum ringgoldianum), okinawamozuku (Cladosiphon okamuranus), kaigaraamanori (Porphyra tenuipedalis), kagomenori (Hydroclathrus clathratus), kazime (arame, Ecklonia bicyclis), buckwheat, fonio, quinoa, Japanese barnyard millet, foxtail millet, proso millet, giant corn, sugar cane, and amaranth. In particular, for example, rice, corn (in particular, preferably sweet corn), and giant corn are preferred.

The spices may be of any type as long as the edible part and/or the inedible part thereof contains insoluble dietary fibers, and examples thereof include, but not limited to, white pepper, red pepper, chili, horseradish, mustard, poppy seed, nutmeg, cinnamon, cardamom, cumin, saffron, allspice, cloves, Japanese pepper, orange peel, fennel, licorice, fenugreek, dill seed, Sichuan pepper, long pepper and olive fruit. In particular, for example, white pepper, red pepper, and chili are particularly preferred.

The form of the foodstuff containing insoluble dietary fiber is not particularly limited, and a raw foodstuff may be used, or a foodstuff processed by the above-described various treatments (for example, drying, heating, harshness removal, peeling, seed removal, ripening, salting, and pericarp processing) may be used. From the viewpoint of operability of coating application to a solid food, it is preferable to use a foodstuff previously subjected to drying treatment, i.e., a dried foodstuff. As the method for drying a foodstuff, any method that is generally used for drying foods can be used. Examples of the method include sun drying, shade drying, freeze drying, air drying (e.g., hot air drying, fluidized bed drying, spray drying, drum drying, or low temperature drying), press drying, reduced pressure drying, microwave drying, and oil heat drying. In particular, a method by air drying (e.g., hot air drying, fluidized bed drying, spray drying, drum drying, or low temperature drying) or freeze drying is preferred because the degree of change in color tone and flavor originally possessed by a foodstuff is small and the scent (e.g., scorched smell) other than the food can be controlled.

### [Other foodstuffs]

The solid food of the present invention may include, in addition to the foodstuff containing an insoluble dietary fiber, any one or more foodstuffs not containing insoluble dietary fibers. Examples of such a foodstuff include plant foodstuffs, microbial foods, and animal foodstuffs.

### [Inedible part and edible part of foodstuff]

Both the edible part and the inedible part of the foodstuff containing an insoluble dietary fibers are used in the solid food of the present invention. In the present invention, the "inedible part" of a foodstuff refers to a part of the foodstuff that is usually unsuitable for eating or drinking and is discarded in normal dietary habits, and the "edible part" refers to a part obtained by removing the disposal part (inedible part) from the entire foodstuff. In particular, for a foodstuff containing an insoluble dietary fiber, the part containing insoluble dietary fibers has poor feeding ability and compatibility with other foodstuffs and has not been used for eating and has been discarded a lot. The present invention can suitably use inedible parts containing such insoluble dietary fibers.

The edible part and the inedible part of the foodstuff containing an insoluble dietary fiber that is used in the solid food of the present invention may be each derived from a single foodstuff containing an insoluble dietary fiber or may be an arbitrary combination of those derived from multiple foodstuffs containing an insoluble dietary fiber. Furthermore, the dry mass ratio, "(inedible part)/((edible part) + (inedible part))", is more than 0 mass%, preferably 1.0 mass% or more, and more preferably 2.0 mass% or more, because the quality of taste of the edible part may be improved. In addition, the upper limit of the ratio is preferably 85 mass% or less, 70 mass% or less, or further 60 mass% or less, because the core food can be firmly coated in some cases.

Although the edible part and the inedible part may be derived from different foodstuffs containing an insoluble dietary fiber, it is preferable to contain the edible part and the inedible part derived from the same foodstuff containing an insoluble dietary fiber. That is, it is possible to eat the nourishment of a foodstuff containing an insoluble dietary fiber without waste by using a part or the whole of the edible part and a part or the whole of the inedible part derived from the same foodstuff containing an insoluble dietary fiber. In particular, since the solid food of the present invention has characteristics of high water repellency and excellent dispersibility due to the insoluble dietary fibers as described above, a water absorption suppressing effect for the core food is imparted by application of the invention of the present application, and the inedible part of such a foodstuff containing a large amount of insoluble dietary fibers can be used with a higher added value.

According to the present invention, the inedible part is one or more selected from the group consisting of a core of corn, a seed and a calyx of paprika, a seed and guts of pumpkin, peel of beet, a stem and a leaf of broccoli, a sheath of green soybean, a calyx of tomato, a stump of spinach, a petiole base of kale, a sheath of pea, a sheath and a seed coat of broad bean, a root apex and a petiole base of carrot, and peel and ends of sweet potato.

When the solid food of the present invention contains another foodstuff (not containing an insoluble dietary fiber), in addition to a foodstuff containing an insoluble dietary fiber, one can use the edible part and/or the inedible part in an arbitrary combination, as with a foodstuff containing an insoluble dietary fiber.

The site and the proportion of the inedible part in the foodstuff that is used in the solid food of the present invention, that is, the foodstuff containing an insoluble dietary fiber and/or another foodstuff (not containing insoluble dietary fibers) can be naturally understood by those skilled in the art who handle the foods and processed food products. For example, the "disposal part" and the "disposal rate" described in the Standard Tables of Food Composition in Japan, 2015, (Seventh Revised Version) can be referred to and used as the site and the proportion of the inedible part, respectively. The following Table 1 lists examples of the foodstuff containing an insoluble dietary fiber and their "disposal parts" and the "disposal rates" (i.e., the sites and the proportions of the inedible parts) described in the Standard Tables of Food Composition in Japan, 2015, (Seventh Revised Version). One would comprehend the site and the proportion of the edible part, i.e., the site and the proportion of the part other than the inedible part, from the site and the proportion of the inedible part in a foodstuff.

**[Table 1]**

| Foodstuff containing an insoluble dietary fiber | Site of inedible part (disposal part) | Proportion of inedible part (disposal rate) |
|---|---|---|
| Vegetables/green soybean/raw | Sheath | 45% |
| Vegetables/(corns)/sweet corn/immature seed, raw | Bract, pistil, and cob | 50% |
| Vegetables/(pumpkins)/Japanese pumpkin/fruit, raw | Guts, seed, and both ends | 9% |
| Vegetables/(bell peppers)/red bell pepper/fruit, raw (paprika) | Calyx, core, and seed | 10% |
| Vegetables/beet/root, raw | Root apex, peel, and petiole | 10% |
| Vegetables/broccoli/inflorescence, raw | Stem and leaf | 50% |
| Vegetables/(tomatoes)/tomato/fruit, raw | Calyx | 3% |
| Vegetables/(cabbages)/cabbage/head leaf, raw | Core | 15% |
| Vegetables/spinach/leaf, raw | Stump | 10% |
| Vegetables/kale/leaf, raw | Petiole base | 3% |
| Vegetables/(peas)/green pea/raw | Sheath | 55% |
| Vegetables/broad bean/immature bean/raw | Seed coat, sheath | 80% |
| Vegetables/(carrots)/root, with peel, raw | Root apex and petiole base | 3% |
| Potatoes and starches/sweet potato/tuberous root, raw | Peel and both ends | 10% |

### [Finely pulverized product]

The finely pulverized product of the present invention is obtained by finely grinding an edible part and an inedible part of a foodstuff containing an insoluble dietary fiber, and the method of the fine grinding treatment is not particularly limited. The temperature during the fine grinding treatment is also not limited, and the method may be any of high temperature grinding, ordinary temperature grinding, and low temperature grinding. The pressure during the fine grinding treatment is also not limited, and the method may be any of high pressure grinding, normal pressure grinding, and low pressure grinding. However, from the viewpoint of adjusting the particle diameter within a specific range prescribed in the present invention, preferred is a method that can treat the foodstuff and other components as the materials of the composition with a high shear force under pressurized conditions and temperature-rising conditions. Examples of the apparatus for fine grinding treatment include equipment such as a blender, a mixer, a mill, a kneader, a grinder, a crusher, and an attritor, and any of them may be used. The system for the fine grinding treatment may be either dry grinding or wet grinding. In dry fine grinding treatment, as the apparatus therefor, for example, a medium stirring mill, such as a dry bead mill and a ball mill (a rolling type, a vibration type, etc.), a jet mill, a high-speed rotary impact type mill (e.g., pin mill), a roll mill, or a hammer mill can be used. In contrast, in wet fine grinding treatment, as the apparatus therefor, for example, a medium stirring mill, such as a bead mill and a ball mill (a rolling type, a vibration type, a planet type mill, etc.), a roll mill, a colloid mill, a starburst system, or a high-pressure homogenizer can be used.

In particular, dry grinding is preferred from the viewpoint that the foodstuff containing an insoluble dietary fiber directly strongly exerts a water absorption suppressing effect for the core food and integrated impression in taste of the solid food and the liquid food to be mixed, the manufacturing process is simpler, and the processed material has easier handling.

In the present invention, wet grinding can also be performed, and in such a case, a medium stirring mill (ball mill, bead mill) or a high-pressure homogenizer is preferred, and a medium stirring mill is more preferred. In particular, it is preferable to use a wet medium stirring mill, particularly, a wet bead mill. It is preferable to finely grind a foodstuff containing an insoluble dietary fiber together with fat/oil described later with a wet medium stirring mill, because high quality of homogeneity and stability of the foodstuff in the fat/oil is obtained, compared to when a separately dry pulverized foodstuff containing an insoluble dietary fiber is mixed with fat/oil.

In the finely pulverizing treatment of an edible part and an inedible part of a foodstuff containing an insoluble dietary fiber, it is preferable to perform the above-described drying treatment prior to the grinding treatment, from the viewpoint of the treatment efficiency thereof. Furthermore, the finely pulverized product is preferably a dry finely pulverized product subjected to dry fine grinding treatment, from the viewpoint of sufficiently extracting the preferable flavor originally possessed by the foodstuff containing an insoluble dietary fiber and the viewpoint of subsequent handling.

### [d90]

The term "d90" in the present invention refers to a 90% integrated diameter of particle diameters and is defined as a particle diameter at which the ratio of the proportion of the cumulative value of particle frequency % on the large side to the proportion of the cumulative value of particle frequency % on the small side is 10:90 when the particle diameter distribution of a composition is divided into two from a certain diameter. The term "particle diameter" in the present invention refers to that measured on a volume basis unless otherwise specified. The particle diameter d90 of a composition can be measured using a laser diffraction particle distribution analyzer (for example, Microtrac MT3300 EXII system of MicrotracBEL Corp. can be used. Although the measurement application software is not limited, for example, DMS2 (Data Management System version 2, MicrotracBEL Corp.) can be used.). In the present invention, it is preferable to adjust the d90 of a finely pulverized product of a foodstuff containing an insoluble dietary fiber within a prescribed range.

Specifically, the d90 of a finely pulverized product of an edible part and an inedible part of a foodstuff containing an insoluble dietary fiber in the present invention is not particularly limited, and usually the d90 is preferably 600 µm or less, particularly preferably 450 µm or less, and further more preferably 400 µm or less. The lower limit is also not particularly limited, and usually the d90 is preferably 20 µm or more, particularly preferably 50 µm or more, particularly preferably 80 µm or more, and further more preferably 100 µm or more. A d90 of not higher than the upper limit is preferable because the particle diameter and the surface area of the finely pulverized product are suitably adjusted, and thereby the finely pulverized product easily coats uniformly and thoroughly the surface of a fat/oil composition and the preferable taste originally possessed by the finely pulverized product is easily released rapidly to the liquid food to be mixed. In contrast, when the d90 is not lower than the lower limit, the finely pulverized product can be prevented from having a too small particle diameter and from causing tendency of strongly coating the surface of the fat/oil composition. It is preferable that consequently the resulting solid food is not too hard and the crispy texture of the core food tends to be maintained. In the present invention, the measured value of the particle diameter represents the value after disturbance, and ultrasonic treatment is assumed as a typical example of the disturbance unless otherwise specified. In the present invention, the term "ultrasonic treatment" refers to treatment by applying ultrasonic waves having a frequency of 40 kHz to a measurement sample at an output of 40 W for 3 minutes unless otherwise specified.

### [Fat/oil]

The solid food of the present invention contains one or more fats/oils. Although various fatty acids (for example, linoleic acid, linolenic acid, oleic acid, palmitic acid, stearic acid, hexanoic acid, octanoic acid, decanoic acid, lauric acid, myristic acid, and pentadecanoic acid) constituting fat/oil may be used alone or in combination of two more, it is preferable to use, for example, edible fat/oil, a foodstuff including edible fat/oil, or a foodstuff made from edible fat/oil.

Examples of the edible fat/oil include sesame oil, rapeseed oil, high oleic rapeseed oil, soybean oil, palm oil, palm stearin, palm olein, palm kernel oil, palm fractionated oil (PMF), cottonseed oil, corn oil, sunflower oil, high oleic sunflower oil, safflower oil, olive oil, linseed oil, rice oil, camellia oil, perilla oil, flavor oil, coconut oil, grape seed oil, peanut oil, almond oil, avocado oil, salad oil, canola oil, fish oil, beef tallow, lard, chicken fat, or MCT (medium chain fatty acid triglyceride), diglyceride, hydrogenated oil, transesterified oil, milk fat, ghee, and cacao butter. In particular, liquid edible fat/oil, such as sesame oil, olive oil, rapeseed oil, soybean oil, milk fat, sunflower oil, rice oil, and palm olein, is preferred because of ease in coating of the core food of a solid food and ease in preparation of a fat/oil composition described later.

The liquid edible fat/oil in the present invention is fat/oil having liquid fluidity at ordinary temperature. The term "ordinary temperature" in the present invention refers to 20°C unless otherwise specified. In addition, the term "liquid fluidity" in the present invention means having a Bostwick viscosity at 20°C for 10 seconds of 10 cm or more, more preferably 15 cm or more, and further more preferably 28 cm or more with a Bostwick viscometer. Here, the term "Bostwick viscosity" means the measured value of the flow distance of a sample in a trough at a prescribed temperature for a prescribed time. In addition, the Bostwick viscometer used has a trough length of 28.0 cm, where the maximum Bostwick viscosity, i.e., maximum flow distance of a sample in the trough is 28.0 cm.

On the other hand, from the viewpoint of handling during manufacturing, it is preferable to use fat/oil other than cacao butter. A single edible fat/oil may be used, or an arbitrary combination of two or more fats/oils may be used. The edible fat/oil is preferably edible fat/oil in which the proportion of unsaturated fatty acid (sum of the proportions of monovalent unsaturated fatty acid and multivalent unsaturated fatty acid) is higher than the proportion of saturated fatty acid because fine grinding can be efficiently performed, and the proportion of unsaturated fatty acid is preferably twice or more the proportion of saturated fatty acid.

On the other hand, examples of the foodstuff made from edible fat/oil (hereinafter, may also be referred to as foodstuff containing fat/oil) include butter, margarine, shortening, fresh cream, soybean milk cream (e.g., "Ko-cream" (registered trademark) of Fuji Oil Co., Ltd.), and various seed pastes. Foodstuffs that are liquid or paste at ordinary temperature are preferable in terms of handling. The foodstuffs containing edible fat/oil among the above foodstuffs containing an insoluble dietary fiber and other foodstuffs can be used for the purpose above. These foodstuffs may be used alone or in an arbitrary combination of two or more thereof.

### [Fat/oil composition]

Furthermore, the liquid edible fat/oil and the foodstuff containing edible fat/oil may be used respectively alone, or may be used as a mixture thereof, or may be used as a mixture with a foodstuff containing an insoluble dietary fiber (hereinafter, these are referred to as fat/oil compositions).

However, in the solid food of the present invention, from the viewpoint of improving the adhesion for coating a core food by a fat/oil composition with sufficient strength, preferably, the fat/oil composition contains the above-described foodstuff containing edible fat/oil in addition to extracted and refined edible fat/oil or uses a foodstuff containing edible fat/oil alone, regardless of whether or not the foodstuff containing an insoluble dietary fiber and other foodstuffs contain fat/oil. Specifically, 10 mass% or more, further 30 mass% or more, of all fats/oils contained in the fat/oil composition of the present invention are preferably derived from a foodstuff containing edible fat/oil. In particular, the foodstuff containing edible fat/oil is preferably a seed paste, further specifically, an almond paste from the viewpoint of its aptitude of adhesion. Cacao butter is a solid at ordinary temperature (20°C) and is poor in coating operability and is preferably not included in the fat/oil composition.

As described above, the fat/oil composition may be a homogeneous mixture of a finely pulverized product of an edible part and an inedible part of a foodstuff containing an insoluble dietary fiber prepared by dry pulverizing and the above-mentioned edible fat/oil and/or a fat/oil composition containing a foodstuff containing fat/oil or may be a wet pulverized product of the above-mentioned edible fat/oil and/or a foodstuff containing fat/oil with an edible part and an inedible part of a foodstuff containing an insoluble dietary fiber. In particular, the former is preferred from the viewpoint of operability.

An aspect in which the surface of a core food is coated with the fat/oil composition not containing a finely pulverized product of an edible part and an inedible part and the surface thereof is further coated with a dry finely pulverized product of an edible part and an inedible part of the foodstuff containing an insoluble dietary fiber is preferable. This is because that the fat/oil composition basically has water repellency and is coated with a dry finely pulverized product of an edible part and an inedible part of the foodstuff containing an insoluble dietary fiber, release of fat/oil from the fat/oil composition to a liquid food to be mixed is prevented by the water repellency to suppress the deterioration of appearance through oil droplets and uneven taste, and a sufficient amount of a water-soluble component having a preferable taste that is originally possessed by an edible part and an inedible part of the foodstuff containing an insoluble dietary fiber is directly released into a food to be mixed to enhance integrated impression in taste of the food to be mixed and the solid food of the present invention.

In the solid food of the present invention, the lower limit of the ratio of the dry mass of the fat/oil composition to the mass of the whole solid food is preferably 5 mass% or more, particularly preferably 10 mass% or more, and further more preferably 15 mass% or more. This is because when the ratio is not lower than the above-mentioned lower limit, the coating effect of the fat/oil composition can be more certainly obtained, and crispiness in texture in, in particular, a liquid food to be mixed at a high temperature (in general, 60°C or more) is easily maintained. In contrast, the upper limit is preferably 65 mass% or less, particularly preferably 60 mass% or less, and further more preferably 50 mass% or less. This is because when the ratio is not higher than the upper limit, the coating effect of the fat/oil composition can be appropriately suppressed, and crispiness in texture is easily felt.

### [Sugar coating]

In the present invention, the core food may be coated with sugar before being coated with a fat/oil composition. This is because the adhesion of the fat/oil composition to the core food is further improved by the presence of sugar coating. Here, the "sugar" is a general sugar (e.g., glucose, sucrose, fructose, glucose fructose liquid sugar, and fructose glucose liquid sugar) and may be any sugar that is solidified when used as an aqueous solution for sugar coating and dried. In particular, from the viewpoint of a recent nature-oriented perspective, the aqueous solution containing a sugar (sugar solution) is preferably a solution containing honey or plant juice (e.g., juice of sugarcane or a fruit or maple syrup) and/or concentrate thereof and/or dry matter thereof and more preferably fruit juice and/or concentrate thereof and/or dry matter thereof.

In the present invention, the ratio of the total dry mass of an edible part and an inedible part of a foodstuff containing an insoluble dietary fiber to the mass of all insoluble components of the finely pulverized product of an edible part and an inedible part of a foodstuff containing an insoluble dietary fiber and the fat/oil composition is preferably 15 mass% or more and particularly preferably 30 mass% or more, and a total dry mass of 50 mass% or more significantly enhances the effect of imparting integrated impression in taste to a liquid food to be mixed and is therefore more preferable. The term "insoluble" herein refers to being insoluble in water.

### [Seasoning, food additive, etc.]

The solid food of the present invention may contain arbitrary one or more seasoning and food additives. Examples of the seasoning and food additives include soy sauce, soybean paste, alcohols, sugars (e.g., glucose, sucrose, fructose, glucose fructose liquid sugar, and fructose glucose liquid sugar), sugar alcohols (e.g., xylitol, erythritol, and maltitol), artificial sweeteners (e.g., sucralose, aspartame, saccharin, and acesulfame K), minerals (e.g., calcium, potassium, sodium, iron, zinc, and magnesium, and salts thereof), flavoring, pH adjusters (e.g., sodium hydroxide, potassium hydroxide, lactic acid, citric acid, tartaric acid, malic acid, and acetic acid), cyclodextrin, antioxidants (e.g., vitamin E, vitamin C, tea extract, raw coffee bean extract, chlorogenic acid, spice extract, caffeic acid, rosemary extract, vitamin C palmitate, rutin, quercetin, bayberry extract, and sesame extract), emulsifiers (examples include glycerol fatty acid ester, acetic acid monoglyceride, lactic acid monoglyceride, citric acid monoglyceride, diacetyl tartaric acid monoglyceride, succinic acid monoglyceride, polyglycerol fatty acid ester, polyglycerol condensed ricinoleic acid ester, quillaia extract, soybean saponin, tea seed saponin, and sucrose fatty acid ester), colorants, and thickening stabilizers.

However, with the recent increase in nature-oriented perspective, the solid food of the present invention preferably does not contain so-called emulsifier and/or colorant and/or thickening stabilizer (for example, those listed as "colorant", "thickening stabilizer", and "emulsifier" in "Table of food additive names for indication" of Food Additives Indication Pocket Book (2011 edition)). In particular, from the viewpoint of providing quality to emphasize the taste of the material, the composition of the present invention preferably does not contain an emulsifier. It is especially desired that the composition of the present invention does not contain food additives (e.g., materials listed for food additive application in "Table of food additive names for indication" of Food Additives Indication Pocket Book (2011 edition)). In addition, from the viewpoint that the sweetness of the food itself can be easily felt, it is preferable not to contain sugars (such as glucose, sucrose, fructose, glucose fructose liquid sugar, and fructose glucose liquid sugar). The composition of the present invention may be an aspect of not containing acetic acid because it can emphasize the taste of the material more readily.

### [Manufacturing method]

The present invention also includes a method for manufacturing the solid food, according to claim 12.

Furthermore, it is more preferable that the manufacturing method of the present invention include a step (4) of subjecting the solid food obtained in the step (2) or (3) to heating treatment at 80°C for 1 minute or more. The heating treatment condition is further more preferably 80°C for 2 minutes or more. In particular, the heating treatment at 80°C for 1 minute or more in the step (4) can further decrease the water content in the solid food, enhance the adhesion of each coating material to the core food, and increase crispiness in texture.

In the method for manufacturing a solid food, the fat/oil composition preferably contains a pasted product of seeds, and more preferably, the core food is further sugar-coated. In particular, it is preferable to perform drying treatment until the value of water activity decreases by 0.05 or more after the step of coating with the fat/oil composition of (1). This is because crispiness in texture of the solid food can be increased.

In the manufacturing method, the edible part and the inedible part of a foodstuff containing an insoluble dietary fiber coating the surface of a fat/oil composition are preferably derived from the same foodstuff containing insoluble dietary fiber. Furthermore, the foodstuff containing insoluble dietary fiber is preferably one or more selected from the group consisting of seeds, grain, beans, vegetables, and fruits. In particular, the foodstuff containing an insoluble dietary fiber including an inedible part and an edible part is preferably one or more selected from the group consisting of paprika, beet, green soybean, corn, carrot, pumpkin, pea, sweet potato (e.g., purple sweet potato, which is one of sweet potatoes), broad bean, broccoli, spinach, and kale. And the inedible part is one or more selected from the group consisting of a core of corn, a seed and a calyx of paprika, a seed and guts of pumpkin, peel of beet, a stem and a leaf of broccoli, a sheath of green soybean, a calyx of tomato, a stump of spinach, a petiole base of kale, a sheath of pea, a sheath and a seed coats of broad bean, a root apex and a petiole base of carrot, and peel and ends of sweet potato.

In the present invention, the core food is coated with a fat/oil composition containing a finely pulverized product of an edible part and an inedible part of a foodstuff containing an insoluble dietary fiber, and thereby the fat/oil composition shows water repellency to the water derived from a liquid food to be mixed to maintain preferable crispy texture for a long time. Furthermore, it is preferable to coat the core food with a fat/oil composition and further coat the surface thereof with a finely pulverized product of an edible part and an inedible part of a foodstuff containing an insoluble dietary fiber because the combination of the water repellency of the fat/oil composition and the further strong coating of the core food with the insoluble dietary fibers contained in the finely pulverized product of an edible part and an inedible part of foodstuff containing an insoluble dietary fiber- due to the affinity for fats/oils causes water repellency by the insoluble dietary fibers, and the preferable crispy texture of the core food can be highly expressed for a long time.

When a core food is coated with a fat/oil composition containing a finely pulverized product of an edible part and an inedible part of a foodstuff containing an insoluble dietary fiber, a part of the preferable coloring matter and flavor component originally possessed by the foodstuff and embraced in a mesh shape of the insoluble dietary fibers spreads evenly in a liquid food to be mixed, and a part thereof also remains on the surface of the core food together with the dietary fibers to give integrated impression in appearance and taste of the liquid food to be mixed and the solid food. It is preferable to coat a core food with a fat/oil composition and further coat the surface thereof with a finely pulverized product of an edible part and an inedible part of a foodstuff containing an insoluble dietary fiber because the insoluble dietary fibers contained in the finely pulverized product of an edible part and an inedible part of a foodstuff containing an insoluble dietary fiber further strongly coat the core food due to the affinity for fats/oils, and as a result, oil floating on the surface of a liquid food to be mixed due to oil separation from the fat/oil composition is prevented, a part of the preferable coloring matter and flavor component originally possessed by the foodstuff and embraced in a mesh shape of the insoluble dietary fibers more actively spreads evenly in a liquid food to be mixed, and a part thereof also remains on the surface of the core food together with the dietary fibers to give stronger integrated impression in appearance and taste of the liquid food to be mixed and the solid food. That is, it is indispensable that the fat/oil composition is present in the inner layer of the foodstuff containing an insoluble dietary fiber including an inedible part and an edible part thereof or mixed with the foodstuff. Although sugar coating is not mandatory, if it is present, it is preferably present in the inner layer.

As described above, when the core food is coated with a fat/oil composition containing a finely pulverized product of an edible part and an inedible part of a foodstuff containing an insoluble dietary fiber or further more preferably a core food is coated with a fat/oil composition and the surface thereof is further coated with a finely pulverized product of an edible part and an inedible part of a foodstuff containing an insoluble dietary fiber, the preferable crispy texture of the core food is maintained for a long time in eating the solid food of the present invention together with a liquid food to be mixed, and an effect of integrated impression in both appearance and flavor of the liquid food to be mixed and the solid food is obtained. This effect is achieved by containing a foodstuff containing a large amount of insoluble dietary fibers, more preferably, containing an inedible part of a foodstuff containing a larger amount of insoluble dietary fibers, adjusting the ratio of the total mass of the mass of the finely pulverized product of an edible part and an inedible part of a foodstuff containing an insoluble dietary fiber and the mass of the fat/oil composition to the surface area of the core food within a certain range, or adjusting the ratio of the mass of the finely pulverized product of an edible part and an inedible part of a foodstuff containing an insoluble dietary fiber to the surface area of the core food within a certain range.

Furthermore, a solid food composite composed of two or more of the above-described solid foods combined with one another also shows the effects of the present invention and is therefore preferable.

### Examples (the examples which are not within the scope or the claims are not part of the invention)

The present invention will now be described in more detail with reference to Examples, but these Examples are merely examples for convenience of description, and the present invention is not limited to these Examples in any sense.

### [Example 1] Verification of combination of coating material with core food

Here, puffed brown rice was selected as the core food, and the existence of the type and combination of materials coating it were verified. The core food was coated with the combination of coating materials according to the order of coating shown in Table 2 (a part of test examples was further subjected to heating treatment shown in Table 2) to prepare each solid food. The solid food was mixed with a liquid food to be mixed at a volume ratio, solid food : liquid food to be mixed, of 1 : 2, and the mixture was sufficiently stirred with a spoon and was left to stand at room temperature (20°C) for 20 minutes. The consequent texture of the solid food and the integrated impression in taste with the liquid food to be mixed were evaluated by the following criteria. Characteristic points were noted in other remarks. The surface area of each core food was determined by selecting 10 representative grains of the core food, measuring the major axis (cm), the minor axis (cm), and the thickness (cm) of each grain, and calculating the surface area by a computational expression: surface area of virtual rectangular parallelepiped = ((major axis) × ((minor axis) × 2 + (thickness) × 2) + (minor axis) × (thickness) × 2)/100, and the mass of each grain was measured, and the respective average values were determined. Each surface area per mass is shown in Table 2. The ratio of the total mass of the mass of a finely pulverized product of an edible part and an inedible part of a foodstuff containing an insoluble dietary fiber and the mass of a fat/oil composition used for coating shown in Table 2 to the surface area of the core food (g per 100 cm²) was determined by dividing the total mass by the surface area. The volume of the puffed brown rice as the core food was within the range of 1 to 20 mm³ (the volumes of other core foods in Examples subsequent to this Example were also within the same range).

Sensory evaluation was performed by 10 trained sensory inspectors in total. The sensory inspectors were chosen from inspectors who were trained for the following discrimination training A) to C) and showed particularly excellent results and were those having experience in product development and a wealth of knowledge about the quality of food such as taste and texture and being capable of performing absolute evaluation on each sensory inspection item.
A) Taste discrimination test for accurately identifying each taste sample from seven samples composed of aqueous solution samples of the five tastes (sweetness: sugar taste, sourness: tartaric acid taste, umami: sodium glutamate taste, saltiness: sodium chloride taste, bitterness: caffeine taste), prepared so as to have a concentration close to the threshold of each component, and two distilled water samples;
B) Concentration difference discrimination test for accurately identifying the difference in concentration between five sodium chloride solutions and acetic acid solutions having slightly different concentrations; and
C) Three-point discrimination test for accurately identifying a soy sauce of B company from three samples composed of two soy sauces of A company and the soy sauce of B company. In each of the above evaluation items, all the inspectors evaluated the standard samples in advance, standardized each score of the evaluation criteria, and then performed sensory inspection with objectivity by 10 inspectors in total. The evaluation of each evaluation item was performed by a method in which each inspector selects one number closest to the inspector's own evaluation in five-grade evaluation of each item. The total result of the evaluation was calculated from the arithmetic mean values of the scores by 10 inspectors in total.

### (Evaluation criteria 1: Texture of solid food)

5: Water absorption and moisture are not felt, and the crispy texture is the same as that before mixing with a liquid food to be mixed;
4: Moisture is slightly felt, but the crispy texture is almost the same as that before mixing with a liquid food to be mixed;
3: Moisture is somewhat felt, but the crispy texture is felt similar to that before mixing with a liquid food to be mixed, within an acceptable range;
2: Moisture is felt, and the crispy texture is somewhat lost compared to that before mixing with a liquid food to be mixed; and
1: Softening due to water absorption is felt, and the crispy texture is obviously lost compared to that before mixing with a liquid food to be mixed.

### (Evaluation criteria 2: Integrated impression in taste with liquid food to be mixed)

5: The flavor of the foodstuff is sufficiently transferred to a liquid food to be mixed, the flavor of the foodstuff sufficiently remains also in the solid food, and integrated impression in taste is strongly felt;
4: The flavor of the foodstuff is strongly transferred to a liquid food to be mixed, the flavor of the foodstuff is remains also in the solid food, and integrated impression in taste is felt;
3: The flavor of the foodstuff is strongly transferred to a liquid food to be mixed, and although the flavor of the foodstuff of the solid food is somewhat weak, the integrated impression in taste is within an acceptable range;
2: Almost all the flavor of the foodstuff is transferred to a liquid food to be mixed, or the flavor is not transferred, and the flavor of the foodstuff of the solid food is weak or too strong, and the integrated impression in taste is slightly poor; and
1: The flavor of the foodstuff is transferred or not transferred to a liquid food to be mixed, the flavor of the foodstuff of the solid food is extremely weak or extremely too strong, and integrated impression in taste is not felt at all.

### (Evaluation criteria 3: Comprehensive evaluation)

5: Crispiness in texture and integrated impression in taste are both achieved and are extremely preferable;
4: Crispiness in texture and integrated impression in taste are almost achieved and are preferable;
3: The balance between crispiness in texture and integrated impression in taste is somewhat biased within an acceptable range;
2: The balance between crispiness in texture and integrated impression in taste is somewhat bad and is somewhat unfavorable; and
1: The balance between crispiness in texture and integrated impression in taste is obviously bad and is unfavorable.

The results are shown in Table 2.

**[Table 2]**

| | Core food | | Sugar coating (1st layer) | Fat/oil composition (2nd layer) | Dry powder of foodstuff containing an insoluble dietary fiber (3rd layer) | Ratio of the total mass of the mass of finely pulverized product of edible part and inedible part of foodstuff containing an insoluble dietary fiber- and the mass of fat/oil composition to the surface area of core food | Evaluation when eaten by mixing with milk (10°C) (after 20 min from mixing, at room temperature 20°C) | | | |
|---|---|---|---|---|---|---|---|---|---|---|
| | 100g | Surface area (cm²) | 70g | 40g | 60g (d90=322 µm) | (g/100cm²) | Texture (crispiness) | Taste (integrated impression) | Comprehensive evaluation | Other remarks |
| Comp. Ex. 1 | Puffed brown rice | 6338 | None | None | None | 0 | 1 | 1 | 1 | - |
| Comp. Ex. 2 | Puffed brown rice | 6338 | Concentrated apple juice | None | None | 0 | 1 | 1 | 1 | - |
| Comp. Ex. 3 | Puffed brown rice | 6338 | None | Palm oil | None | 0.63 | 2 | 1 | 1 | Oil floating observed |
| Comp. Ex. 4 | Puffed brown rice | 6338 | None | Mixing palm oil and olive oil at a mass ratio of 1:1 | None | 0.63 | 2 | 1 | 1 | Oil floating observed |
| Comp. Ex. 5 | Puffed brown rice | 6338 | None | None | Edible part of beet | 0.95 | 1 | 1 | 1 | - |
| Comp. Ex. 6 | Puffed brown rice | 6338 | None | None | Edible part (mass proportion: 80%) + inedible part (peel, mass proportion: 20%) of beet | 0.95 | 2 | 2 | 2 | Light color tone and spotted surface |
| Test Ex. 1* | Puffed brown rice | 6338 | None | Almond paste | Edible part of beet | 1.58 | 4 | 3 | 3 | - |
| Test Ex. 2 | Puffed brown rice | 6338 | None | Almond paste | Edible part (mass proportion: 80%) + inedible part (peel, mass proportion: 20%) of beet | 1.58 | 5 | 5 | 5 | Deep color tone and uniform surface |
| Test Ex. 3 | Puffed brown rice | 6338 | None | Mixing almond paste and olive oil at a mass ratio of 1:1 | Edible part (mass proportion: 80%) + inedible part (peel, mass proportion: 20%) of beet | 1.58 | 5 | 4 | 4 | Slight oil floating observed |
| Test Ex. 4* | Puffed brown rice | 6338 | None | Mixing dry powder of edible part of beet into 1.58 almond paste | | | 3 | 3 | 3 | - |
| Test Ex. 5 | Puffed brown rice | 6338 | None | Mixing dry powder of edible part and inedible part (peel, mass ratio = 4:1) of beet into almond paste | | 1.58 | 5 | 4 | 4 | - |
| Test Ex. 6 | Puffed brown rice | 6338 | None | Wet fine grinding of dry powder of edible part and inedible part (peel, mass ratio = 4:1) of beet in olive oil | | 1.58 | 4 | 4 | 4 | Slight oil floating observed |
| Test Ex. 7 | Puffed brown rice | 6338 | None | Wet fine grinding and coating of dry powder of edible part and inedible part (peel, mass ratio = 4:1) of beet in olive oil, then baking at 80°C for 1 min (a decrease in value of water activity by baking of 0.05) | | 1.58 | 5 | 4 | 4 | Slight oil floating observed |
| Test Ex. 8 | Puffed brown rice | 1280 | Concentrated apple juice | Almond paste | Edible part (mass proportion: 80%) + inedible part (peel, mass proportion: 20%) of beet | 7.81 | 4 | 5 | 4 | - |
| Test Ex. 9 | Puffed brown rice | 1310 | Concentrated apple juice | Almond paste | Edible part (mass proportion: 80%) + inedible part (peel, mass proportion: 20%) of beet in olive oil, after coating, baking at 80°C for 2 min (a decrease in value of water activity by baking of 0.08) | 7.63 | 5 | 5 | 5 | - |

| | | | | | | | | | | |
|---|---|---|---|---|---|---|---|---|---|---|
| * Test Ex. 1 and 4 are not according to the invention. | | | | | | | | | | |

As a result, the evaluation score of each of crispiness in texture and integrated impression in taste was low in the cases of sugar coating only, a fat/oil composition only, or a dry powder of a foodstuff containing an insoluble dietary fiber only (Comparative Examples 2 to 6), and it was found that the effects were not shown by them alone. In contrast, it was found that when both a fat/oil composition and a dry powder of a foodstuff containing an insoluble dietary fiber were used and an inedible part and/or an edible part of a foodstuff containing an insoluble dietary fiber were contained (Test Examples 1 to 9), both crispiness in texture and integrated impression in taste were achieved, resulted in good results in evaluation. It was further found that the innermost layer (1st layer) may be sugar coated (Test Examples 8 and 9).

That is, it was found that when a solid food was eaten together with a liquid food to be mixed, it was essential to use both a fat/oil composition and a foodstuff containing an insoluble dietary fiber containing an inedible part thereof for achieving both crispiness in texture and integrated impression in taste, and sugar coating may be performed.

### [Example 2] Verification of order of coating of core food with coating materials

It was found in Example 1 that in order to achieve both crispiness in texture and integrated impression in taste in eating of the solid food of the present invention together with a liquid food to be mixed, it was essential to use both a fat/oil composition and a foodstuff containing an insoluble dietary fiber including an inedible part and/or an edible part thereof, and sugar coating may be performed. Accordingly, here, it was verified a relationship between the order of coating them and the effect. In addition, combinations of coating materials other than the combinations verified in Example 1 were also additionally verified. Solid foods were prepared by coating with coating materials in the order (the innermost layer is the 1st layer, and the outermost layer is the 3rd layer) of various combinations shown in Table 3. Measurement and evaluation were performed in the same manner as in Example 1.

The results are shown in Table 3.

**[Table 3]**

| | Core food | | Type of coating material and order of coating | | | Ratio of the total mass of the mass of finely pulverized product of edible part and inedible part of foodstuff containing an insoluble dietary fiber and the mass of fat/oil composition to the surface area of core food | Evaluation when eaten by mixing with milk (10°C) (after 20 min from mixing, at room temperature 20°C) | | | |
|---|---|---|---|---|---|---|---|---|---|---|
| | 100g | Surface area (cm²) | 1st layer (innermost layer) | 2nd layer (middle layer) | 3rd layer (outermost layer) | (g/100cm²) | Texture (crispiness) | Taste (integrated impression) | Comprehensive evaluation | Other remarks |
| Test Ex. 2 | Puffed brown rice | 4460 | Almond paste (40g) | Dry powder of edible part (mass proportion: 80%) + inedible part (peel, mass proportion: 20%) of beet (60q,d90=322 µm) | None | 2.24 | 5 | 5 | 5 | - |
| Comp. Ex. 7 | Puffed brown rice | 1310 | Concentrated apple juice (70g) | Almond paste (40g) | None | 3.05 | 4 | 1 | 1 | - |
| Comp. Ex. 8 | Puffed brown rice | 1340 | Almond paste (40g) | Concentrated apple juice (70g) | None | 2.99 | 5 | 1 | 1 | - |
| Comp. Ex. 9 | Puffed brown rice | 4300 | Concentrated apple juice (70g) | Dry powder of edible part (mass proportion: 80%) + inedible part (peel, mass proportion: 20%) of beet (60g,d90=322 µm) | None | 1.40 | 3 | 2 | 1 | - |
| Comp. Ex. 10 | Puffed brown rice | 6338 | Dry powder of edible part (mass proportion: 80%) + inedible part (peel, mass proportion: 20%) of beet (60g,d90=322 µm) | Concentrated apple juice (70g) | None | 0.95 | 3 | 2 | 2 | - |
| Test Ex. 10* | Puffed brown rice | 1240 | Concentrated apple juice (70g) | Almond paste (40g) | Dry powder of edible part (mass proportion: 100%) of beet (60g,d90=322 µm) | 8.06 | 3 | 4 | 3 | - |

| | | | | | | | | | | |
|---|---|---|---|---|---|---|---|---|---|---|
| * Test Ex. 10 is not according to the invention. | | | | | | | | | | |

As a result, it was found that in the combinations of coating materials other than those verified in Example 1 and coating orders (Comparative Examples 7 to 10), crispiness in texture and integrated impression in taste was not to be simultaneously achieved in eating the solid food together with a liquid food to be mixed. That is, it was found that it was necessary that a fat/oil composition is present in the inner layer of a foodstuff containing an insoluble dietary fiber including an inedible part and/or an edible part thereof or mixed with the foodstuff (Test Examples 2 and 10). It was found that sugar coating was not essential, but if present, it was preferable that the sugar coating be in the inner layer of the foodstuff (Test Example 10).

### [Example 3] Verification 1 of ratio of amount of coating material added to core food

Here, the ratio of the total mass of the mass of a finely pulverized product of an edible part and an inedible part of a foodstuff containing an insoluble dietary fiber and the mass of a fat/oil composition to the surface area of a core food was verified. Solid foods were prepared at the respective ratios shown in Table 4. Measurement and evaluation were performed in the same manner as in Example 1.

The results are shown in Table 4.

**[Table 4]**

| | Core food | | | Fat/oil composition | Ratio of the total mass of the mass of finely pulverized product of edible part and inedible part of foodstuff containing an insoluble dietary fiber and the mass of fat/oil composition to the surface area of core food | Ratio of the total mass of finely pulverized product of edible part and inedible part of foodstuff containing an insoluble dietary fiber to the surface area of core food | Evaluation when eaten by mixing with soybean milk (10°C) (after 20 min from mixing, at room temperature 20°C) | | | |
|---|---|---|---|---|---|---|---|---|---|---|
| | Type | Mass | Surface area | Almond paste 80 mass% + dry powder of beet 20 mass% (mass ratio of (edible part) : (inedible part (peel)) = 4:1) | | | Texture (crispiness) | Taste (integrate d impressio n) | Comprehensive evaluation | Other remarks |
| | | (g) | (cm²) | (g) | (g/100cm²) | (g/100cm²) | | | | |
| Comp. Ex. 11 | Puffed brown rice (small grain) | 100 | 6338 | 5 | 0.08 | 0.02 | 2 | 2 | 2 | - |
| Test Ex. 10 | | | 6338 | 10 | 0.16 | 0.03 | 4 | 4 | 4 | - |
| Test Ex. 11 | | | 6338 | 20 | 0.32 | 0.06 | 4 | 4 | 4 | - |
| Test Ex. 12 | | | 6338 | 40 | 0.63 | 0.13 | 5 | 4 | 5 | - |
| Test Ex. 13 | | | 6338 | 60 | 0.95 | 0.19 | 5 | 5 | 5 | - |
| Test Ex. 14 | Puffed brown rice (large grain) | 100 | 4464 | 30 | 0.67 | 0.13 | 5 | 4 | 5 | - |
| Test Ex. 15 | | | 4464 | 50 | 1.12 | 0.22 | 5 | 5 | 5 | - |
| Test Ex. 16 | | | 4464 | 70 | 1.57 | 0.31 | 5 | 5 | 5 | - |
| Test Ex. 17 | Puffed brown rice provided with sugar coating (concentrat ed date juice) | 170 | 2231 | 25 | 1.12 | 0.22 | 5 | 5 | 5 | - |
| Test Ex. 18 | | | 2231 | 50 | 2.24 | 0.45 | 5 | 5 | 5 | - |
| Test Ex. 19 | | | 2231 | 75 | 3.36 | 0.67 | 5 | 4 | 5 | - |
| Test Ex. 20 | | | 2231 | 100 | 4.48 | 0.90 | 4 | 4 | 4 | - |
| Test Ex. 21 | | | 2231 | 125 | 5.60 | 1.12 | 4 | 4 | 4 | - |

Aa a result, it was found that crispy texture was strongly obtained when the ratio of the total mass of the mass of a finely pulverized product of an edible part and an inedible part of a foodstuff containing an insoluble dietary fiber and the mass of a fat/oil composition to the surface area of a core food was not lower than a prescribed lower limit (0.1 g or more per 100 cm²).

### [Example 4] Verification 2 of ratio of amount of coating material added to core food

Here, the ratio of the mass of a finely pulverized product of an edible part and an inedible part of a foodstuff containing an insoluble dietary fiber to the surface area of a core food was verified. Solid foods were prepared at the respective ratios shown in Table 5. Measurement and evaluation were performed in the same manner as in Example 1.

The results are shown in Table 5.

**[Table 5]**

| | Core food | | | Fat/oil composition | Finely pulverized product of edible part and inedible part of foodstuff containing an insoluble dietary fiber | Ratio of the total mass of the mass of finely pulverized product of edible part and inedible part of foodstuff containing an insoluble dietary fiber and the mass of fat/oil composition to the surface area of core food | Ratio of the total mass of finely pulverized product of edible part and inedible part of foodstuff containing an insoluble dietary fiber to the surface area of core food | Evaluation when eaten by mixing with soybean milk (10°C) (after 20 min from mixing, at room temperature 20°C) | | | |
|---|---|---|---|---|---|---|---|---|---|---|---|
| | Type | Mass | Surface area | Almond paste | Dry powder of green soybean (mass ratio of (edible part) : (inedible part (sheath)) = 3:1) | | | Texture (crispiness) (integrated | Taste impression) | Comprehensive evaluation | Other remarks |
| | | (g) | (cm²) | (g) | (g) | (g/100cm²) | (g/100cm²) | | | | |
| Comp. Ex. 12 | Puffed brown rice (small grain) | 100 | 6338 | 5 | 0.5 | 0.09 | 0.01 | 2 | 1 | 1 | The amount of finely pulverized product is too small |
| Comp. Ex. 13 | | | 6338 | 5 | 1 | 0.09 | 0.02 | 2 | 2 | 2 | The amount of finely pulverized product is too small |
| Test Ex. 22 | | | 6338 | 5 | 2 | 0.11 | 0.03 | 4 | 4 | 4 | - |
| Test Ex. 23 | | | 6338 | 5 | 4 | 0.14 | 0.06 | 4 | 4 | 4 | - |
| Test Ex. 24 | | | 6338 | 5 | 8 | 0.21 | 0.13 | 4 | 4 | 4 | - |
| Test Ex. 25 | | | 6338 | 5 | 16 | 0.33 | 0.25 | 4 | 4 | 4 | - |
| Test Ex. 26 | Puffed brown rice (large grain) | 100 | 4464 | 5 | 32 | 0.83 | 0.72 | 5 | 4 | 4 | - |
| Test Ex. 27 | | | 4464 | 5 | 64 | 1.55 | 1.43 | 5 | 5 | 5 | - |
| Test Ex. 28 | | | 4464 | 5 | 96 | 2.26 | 2.15 | 5 | 5 | 5 | - |
| Test Ex. 29 | | | 4464 | 5 | 128 | 2.98 | 2.87 | 5 | 5 | 5 | - |
| Test Ex. 30 | Puffed brown rice provided with sugar coating (concentrated date juice) | 170 | 2231 | 5 | 64 | 3.09 | 2.87 | 5 | 5 | 5 | - |
| Test Ex. 31 | | | 2231 | 5 | 96 | 4.53 | 4.30 | 4 | 5 | 4 | - |
| Test Ex. 32 | | | 2231 | 5 | 128 | 5.96 | 5.74 | 4 | 4 | 4 | - |

As a result, it was found that crispy texture was strongly obtained when the ratio of the mass of a finely pulverized product of an edible part and an inedible part of a foodstuff containing an insoluble dietary fiber to the surface area of a core food was not lower than a prescribed lower limit (0.03 g or more per 100 cm²).

### [Example 5] Verification of dry mass ratio, "(inedible part)/((edible part) + (inedible part))", in finely pulverized product

Here, the optimum range of the dry mass ratio of (inedible part)/((edible part) + (inedible part)) in a finely pulverized product of an edible part and/or an inedible part of a foodstuff containing an insoluble dietary fiber coating a core food was verified. Solid foods were prepared by changing the dry mass ratio of (inedible part)/((edible part) + (inedible part)) in the finely pulverized product of an edible part and/or an inedible part of a foodstuff containing an insoluble dietary fiber shown in Table 6. Measurement and evaluation were performed in the same manner as in Example 1.

The results are shown in Table 6.

**[Table 6]**

| | Core food | | | Fat/oil composition | Finely pulverized product of edible part and inedible part of foodstuff containing an insoluble dietary fiber | | | Dry mass ratio of (inedible part)/((edible part) + (inedible part)) | Ratio of the total mass of the mass of finely pulverized product of edible part and inedible part of foodstuff containing an insoluble dietary fiber and the mass of fat/oil composition to the surface area of core food | Evaluation when eaten by mixing with vegetable juice (5°C) (after 20 min from mixing, at room temperature 20°C) | | | |
|---|---|---|---|---|---|---|---|---|---|---|---|---|---|
| | Type | Mass | Surface area | Hazelnut paste | Dry powder of sweet corn (total amount) | Inedible part (core) | Edible part | | | Texture (crispiness) | Taste (integrated impression) | Comprehensive evaluation | Other remarks |
| | | (g) | (cm²) | (g) | (g) | (g) | (g) | (%) | (g/100cm²) | | | | |
| Test Ex. 33* | | | | 40 | 60 | 0 | 60.0 | 0 | 1.88 | 4 | 4 | 4 | - |
| Test Ex. 34 | | | | 40 | 60 | 0.5 | 59.5 | 0.8 | 1.88 | 4 | 4 | 4 | - |
| Test Ex. 35 | | | | 40 | 60 | 1.0 | 59.0 | 1.7 | 1.88 | 5 | 4 | 4 | - |
| Test Ex. 36 | | | | 40 | 60 | 5.0 | 55.0 | 8.3 | 1.88 | 5 | 5 | 4 | - |
| Test Ex. 37 | Puffed soybean | 100 | 5321 | 40 | 60 | 10.0 | 50.0 | 17 | 1.88 | 5 | 5 | 5 | - |
| Test Ex. 38 | | | | 40 | 60 | 20.0 | 40.0 | 33 | 1.88 | 5 | 5 | 5 | - |
| Test Ex. 39 | | | | 40 | 60 | 30.0 | 30.0 | 50 | 1.88 | 5 | 5 | 5 | - |
| Test Ex. 40 | | | | 40 | 60 | 40.0 | 20.0 | 67 | 1.88 | 5 | 4 | 4 | - |
| Test Ex. 41 | | | | 40 | 60 | 50.0 | 10.0 | 83 | 1.88 | 5 | 4 | 4 | - |
| Test Ex. 42* | | | | 40 | 60 | 60.0 | 0 | 100 | 1.88 | 3 | 3 | 3 | - |

| | | | | | | | | | | | | | |
|---|---|---|---|---|---|---|---|---|---|---|---|---|---|
| * Test Ex. 33 and 42 are not according to the invention. | | | | | | | | | | | | | |

As a result, it was demonstrated that crispy texture and integrated impression in taste were further strongly felt when the dry mass ratio of (inedible part)/((edible part) + (inedible part)) in a finely pulverized product of an edible part and/or an inedible part of a foodstuff containing an insoluble dietary fiber coating the core food was in a prescribed range.

### [Example 6] Verification of ratio of total dry mass of edible part and inedible part of foodstuff containing an insoluble dietary fiber to mass of all insoluble components in finely pulverized product of edible part and/or inedible part of foodstuff containing an insoluble dietary fiber and fat/oil composition

Here, the optimal range of the ratio of the total dry mass of an edible part and an inedible part of a foodstuff containing an insoluble dietary fiber to the mass of all insoluble components in a finely pulverized product of the edible part and the inedible part of the foodstuff containing an insoluble dietary fiber and a fat/oil composition was verified. Solid foods were prepared by changing the total dry mass of an edible part and an inedible part of a foodstuff containing an insoluble dietary fiber relative to the mass of all insoluble components in a finely pulverized product of the edible part and the inedible part of the foodstuff containing an insoluble dietary fiber and a fat/oil composition as shown in Table 7. Measurement and evaluation were performed in the same manner as in Example 1.

The results are shown in Table 7.

**[Table 7]**

| | Core food | | | Fat/oil composition + foodstuff | | Finely pulverized product of edible part and inedible part of foodstuff containing an insoluble dietary fiber | Ratio of the total dry mass of edible part and inedible part of foodstuff containing an insoluble dietary fiber to the total mass of the mass of finely pulverized product and the mass of all insoluble components of fat/oil composition | Ratio of the total mass of the mass of finely pulverized product of edible part and inedible part of foodstuff containing an insoluble dietary fiber and the mass of fat/oil composition to the surface area of core food | Evaluation when eaten by mixing with rice gruel (70°C) (after 60 min from mixing, at room temperature 20°C) | | | |
|---|---|---|---|---|---|---|---|---|---|---|---|---|
| | Type | Mass | Surface area | Almond paste (insoluble component content: 90 mass%) (water content: 5 mass%) | Dried bonito shavings (insoluble component content: 90 mass%) (water: 5 mass%) | Dry powder of broccoli (weight ratio of (edible part) : (inedible part (stem and leaf)) = 4:1) (insoluble component content: 90 mass%) (water: 5 mass%) | | | Texture (crispiness) | Taste (integrated impression) | Comprehensive evaluation | Other remarks |
| | | (g) | (cm²) | (g) | (g) | (g) | (mass%) | (g/100cm²) | | | | |
| Test Example 43 | | | | 40 | 10 | 10 | 17.6 | 1.24 | 5 | 4 | 4 | Taste maintained even in long-time preservation |
| Test Example 44 | | | | 40 | 10 | 20 | 30.2 | 1.49 | 5 | 4 | 4 | Taste maintained even in long-time preservation |
| Test Example 45 | Puffed broad bean | 100 | 4028 | 40 | 10 | 30 | 39.6 | 1.74 | 5 | 4 | 4 | Taste maintained even in long-time preservation |
| Test Example 46 | | | | 40 | 10 | 50 | 52.8 | 2.23 | 5 | 5 | 5 | Taste maintained even in long-time preservation |
| Test Example 47 | | | | 40 | 10 | 80 | 65.0 | 2.98 | 5 | 5 | 5 | Taste maintained even in long-time preservation |

As a result, it was found that crispy texture and integrated impression in texture were further strongly felt when the ratio of the total dry mass of an edible part and an inedible part of a foodstuff containing an insoluble dietary fiber to the mass of all the insoluble components in the finely pulverized product of the edible part and the inedible part of the foodstuff containing an insoluble dietary fiber and a fat/oil composition was in a prescribed range.

### [Example 7] Verification of ratio of fat/oil composition to whole solid food

Here, the optimal range of the ratio of the dry mass of a fat/oil composition to the mass of the whole solid food was verified. Solid foods were prepared by changing the dry mass of a fat/oil composition as shown in Table 8. The evaluation was performed in the same manner as in Example 1.

The results are shown in Table 8.

**[Table 8]**

| | Core food | | | Fat/oil composition | Finely pulverized product of edible part and inedible part of foodstuff containing an insoluble dietary fiber | Proportion of dry mass of fat/oil composition to mass of whole solid food | Ratio of the total mass of the mass of finely pulverized product of edible part and inedible part of foodstuff containing an insoluble dietary fiber and the mass of fat/oil composition to the surface area of core food | Evaluation when eaten by mixing with corn soup (90°C) (after 20 min from mixing, at room temperature 20°C) | | | |
|---|---|---|---|---|---|---|---|---|---|---|---|
| | Type | Mass | Surface area | Almond paste (water content: 5 mass%) | Dry powder of sweet potato (purple sweet potato) (mass (inedible of (edible part): (inedible part (peel)) = 6:1) | | | Texture (crispiness) | Taste (integrated impression) | Comprehensive evaluation | Other remarks |
| | | (g) | (cm²) | (g) | (g) | (%) | (g/100cm²) | | | | |
| Test Ex. 48 | | | | 10 | 60 | 6 | 1.00 | 4 | 4 | 4 | - |
| Test Ex. 49 | | | | 25 | 60 | 13 | 1.21 | 4 | 5 | 4 | - |
| Test Ex. 50 | Puffed broad bean (beans and sheath) | 100 | 7002 | 40 | 60 | 19 | 1.43 | 5 | 5 | 5 | - |
| Test Ex. 51 | | | | 55 | 60 | 24 | 1.64 | 5 | 5 | 5 | - |
| Test Ex. 52 | | | | 80 | 60 | 32 | 2.00 | 5 | 5 | 5 | - |

| | Core food | | | (Fat/oil composition) + (finely pulverized product of foodstuff containing an insoluble dietary fiber) | | Proportion of dry mass of fat/oil composition to mass of whole solid food | Ratio of the total mass of the mass of finely pulverized product of edible part and inedible part of foodstuff containing an insoluble dietary fibe and the mass of fat/oil composition to the surface area of core food | Evaluation when eaten by mixing with corn soup (90°C) (after 20 min from mixing, at room temperature 20°C) | | | |
|---|---|---|---|---|---|---|---|---|---|---|---|
| | Type | Mass | Surface area | (Almond paste (water content: 5 mass%)) + (dry powder of sweet potato (purple sweet potato) (mass ratio of (edible part) : (inedible part (peel)) = 6:1) = mass ratio of 1:1 | | | | Texture crispiness) | Taste (integrated impression) | Comprehensive evaluation | Other remarks |
| | | (g) | (cm²) | (g) | | (%) | (g/100cm²) | | | | |
| Test Ex. 53 | | | | 50 | | 32 | 0.71 | 5 | 5 | 5 | - |
| Test Ex. 54 | | | | 65 | | 37 | 0.93 | 5 | 5 | 5 | - |
| Test Ex. 55 | | | | 75 | | 41 | 1.07 | 5 | 5 | 5 | - |
| Test Ex. 56 | Puffed broad bean (beans and sheath) | 100 | 7002 | 130 | | 54 | 1.86 | 4 | 5 | 4 | - |
| Test Ex. 57 | | | | 175 | | 60 | 2.50 | 4 | 5 | 4 | - |
| Test Ex. 58 | | | | 200 | | 63 | 2.86 | 4 | 4 | 4 | - |

As a result, it was found that crispy texture and integrated impression in texture were further strongly felt when the ratio of the dry mass of a fat/oil composition to the mass of the whole solid food was in a prescribed range.

### [Example 8] Verification of particle diameter of finely pulverized product

Here, the optimal range of the particle diameter of a finely pulverized product of an edible part and/or an inedible part of a foodstuff containing an insoluble dietary fiber coating a core food was verified. Each finely pulverized product of an edible part and/or an inedible part of a foodstuff containing an insoluble dietary fiber having respective particle diameters shown in Table 9 was prepared. The particle diameter of a finely pulverized product was measured with a laser diffraction particle distribution analyzer (Microtrac MT3300 EXII system of MicrotracBEL Corp. was used, and as the measurement application software, DMS2 (Data Management System version 2, MicrotracBEL Corp.) was used) as described above. The evaluation was performed in the same manner as in Example 1.

The results are shown in Table 9.

**[Table 9]**

| | Core food | | | Fat/oil composition | Finely pulverized product of edible part and inedible part of foodstuff containing an insoluble dietary fiber | Particle diameter (d90) of finely pulverized product after disturbance | Ratio of the total mass of the mass of finely pulverized product of edible part and inedible part of foodstuff containing an insoluble dietary fiber and the mass of fat/oil composition to the surface area of core food | Evaluation when eaten by mixing with yogurt (10°C) (after 20 min from mixing, at 20°C) | | | |
|---|---|---|---|---|---|---|---|---|---|---|---|
| | Type | Mass | Surface area | Cashew nut paste | Powder of broad bean (mass ratio of (edible part) : (inedible part (peel and sheath)) = 3:1) | | | Texture (crispiness) | Taste (integrated impression) | Comprehensive evaluation | Other remarks |
| | | (g) | (cm²) | (g) | (g) | (µm) | (g/100cm²) | | | | |
| Test Example 59 | | | | 40 | 60 | 21 | 1.19 | 4 | 4 | 4 | - |
| Test Example 60 | | | | 40 | 60 | 52 | 1.19 | 5 | 4 | 4 | - |
| Test Example 61 | | | | 40 | 60 | 98 | 1.19 | 5 | 5 | 4 | - |
| Test Example 62 | | | | 40 | 60 | 124 | 1.19 | 5 | 5 | 5 | - |
| Test Example 63 | Puffed quinoa | 100 | 8403 | 40 | 60 | 292 | 1.19 | 5 | 5 | 5 | - |
| Test Example 64 | | | | 40 | 60 | 325 | 1.19 | 5 | 5 | 5 | - |
| Test Example 65 | | | | 40 | 60 | 433 | 1.19 | 5 | 4 | 4 | - |
| Test Example 66 | | | | 40 | 60 | 572 | 1.19 | 4 | 4 | 4 | - |

As a result, it was found that crispy texture and integrated impression in texture were further strongly felt when the particle diameter (d90) of a finely pulverized product of an edible part and/or an inedible part of a foodstuff containing an insoluble dietary fiber coating the core food was in a prescribed range.

### [Example 9] Verification of effect in use of various foodstuffs

Here, it was verified whether or not the effect of the present invention is achieved by foodstuffs other than the foodstuffs used in Examples 1 to 8. Solid foods were prepared using various foodstuffs shown in Table 10. The evaluation was performed in the same manner as in Example 1.

The results are shown in Table 10.

**[Table 10]**

| | Core food | | | Fat/oil composition | Finely pulverized product of edible part and inedible part of foodstuff containing an insoluble dietary fiber | | | | (Foodstuff-derived insoluble dietary fiber)/ (solid food) (mass%) | Ratio of the total mass of the mass of finely pulverized product of edible part and inedible part of foodstuff containing an insoluble dietary fiber and the mass of fat/oil composition to the surface area of core food (g/100cm²) | Evaluation when eaten by mixing with almond milk (10°C) (after 20 min from mixing, at room temperature 20°C) | | | |
|---|---|---|---|---|---|---|---|---|---|---|---|---|---|---|
| | Type | Mass (g) | Surface area (cm²) | Pistachio paste (g) | Foodstuff | Inedible part | | (Edible part) + (inedible part) | | | Texture (crispiness) | Taste (integrated impression) | Comprehensive evaluation | Other remarks |
| | | | | | | site | (g) | (g) | | | | | | |
| Test Example 67 | Puffed carrot | 100 | 3280 | 40 | Carrot | Calyx | 5 | 5 | 0.5 | 1.37 | 5 | 3 | 3 | - |
| Test Example 68 | | | | 40 | Pumpkin | Seed, guts | 30 | 20 | 1.1 | 1.83 | 5 | 4 | 4 | - |
| Example 69 | | | | 40 | Paprika | calyx | 25 | 25 | 2.3 | 1.98 | 5 | 5 | 5 | - |
| Test Example 70 | | | | 40 | Green pea | Sheath | 20 | 35 | 3.4 | 2.29 | 5 | 5 | 5 | - |
| Test Example 71 | | | | 40 | Tomato | Calyx | 10 | 60 | 3.5 | 3.05 | 5 | 5 | 5 | - |
| Test Example 72 | | | | 40 | Spinach | Stump | 5 | 95 | 5.1 | 4.12 | 5 | 5 | 5 | - |
| Test Example 73 | | | | 40 | Kale | Petiole base | 10 | 80 | 8.8 | 3.66 | 5 | 5 | 5 | - |

As a result, it was found that both crispiness in texture and integrated impression in taste by the present invention were sufficiently achieved in all foodstuffs containing an insoluble dietary fiber shown in Table 10.

### [Example 10] Verification of maintained effect of the present invention

Here, the time during which both crispiness in texture and integrated impression in taste by the present invention were sufficiently achieved was verified. Solid foods were prepared as shown in Table 11. In particular, here, hot milk (80°C), which requires the effects more strongly, was added as the liquid food to be mixed and the mixture was sufficiently stirred, and then the change with time in crispiness in texture and integrated impression in taste was verified. The evaluation was performed in the same manner as in Example 1.

The results are shown in Table 11.

**[Table 11]**

| | Core food | | | Fat/oil composition | Finely pulverized product of edible part and inedible part of foodstuff containing an insoluble dietary fiber | Ratio of the total mass of the mass of finely pulverized product of edible part and inedible part of foodstuff containing an insoluble dietary fiber and the mass of fat/oil composition to the surface area of core food (g/100cm²) | Elapsed time after mixing with milk (min) | Evaluation when eaten by mixing with hot milk (80°C) (at room temperature 20°C) | | | |
|---|---|---|---|---|---|---|---|---|---|---|---|
| | Type | Mass (g) | Surface area (cm²) | Almond paste (water content: 5 mass%) (g) | Dry powder of onion (mass ratio of (edible part) : (inedible part (protection leaf)) = 7:1) (g) | | | Texture (crispiness) | Taste (integrated impression) | Comprehensive evaluation | Other remarks |
| Test Ex. 74 | Puffed chestnut | 100 | 2870 | 40 | 60 | 3.48 | 5 | 5 | 5 | 5 | - |
| Test Ex. 75 | | | | | | | 10 | 5 | 5 | 5 | - |
| Test Ex. 76 | | | | | | | 20 | 5 | 5 | 5 | - |
| Test Ex. 77 | | | | | | | 30 | 5 | 5 | 5 | - |
| Test Ex. 78 | | | | | | | 45 | 4 | 4 | 4 | - |
| Test Ex. 79 | | | | | | | 60 | 4 | 3 | 3 | - |
| Test Ex. 80 | | | | | | | 90 | 3 | 3 | 3 | - |
| | Core food | | | (Fat/oil composition) + (finely pulverized product of foodstuff containing an insoluble dietary fiber) | | Ratio of the total mass of the mass of finely pulverized product of edible part and inedible part of foodstuff containing an insoluble dietary fiber and the mass of fat/oil composition to the surface area of core food (g/100cm²) | Elapsed time after mixing with milk (min) | Evaluation when eaten by mixing with hot milk (80°C) (at room temperature 20°C) | | | |
| | Type | Mass (g) | Surface area (cm²) | (Almond paste (water content: 5 mass%)) + (dry powder of onion (mass ratio of (edible part) : (inedible part (bract)) = 7:1) = mass ratio of 1:1 (g) | | | | Texture (crispiness) | Taste (integrated impression) | Comprehensive evaluation | Other remarks |
| Test Ex. 81 | Puffed chestnut | 100 | 2870 | 100 | | 3.48 | 5 | 5 | 5 | 5 | - |
| Test Ex. 82 | | | | | | | 10 | 5 | 5 | 5 | - |
| Test Ex. 83 | | | | | | | 20 | 5 | 5 | 5 | - |
| Test Ex. 84 | | | | | | | 30 | 5 | 4 | 4 | - |
| Test Ex. 85 | | | | | | | 45 | 4 | 3 | 3 | - |
| Test Ex. 86 | | | | | | | 60 | 3 | 3 | 3 | - |
| Comp. Ex. 14 | | | | | | | 90 | 2 | 1 | 1 | - |

As a result, it was found that both crispiness in texture and integrated impression in taste by the present invention were sufficiently achieved within 20 minutes after mixing with milk. It was also found that both crispiness in texture and integrated impression in taste were acceptable within 60 minutes. That is, it was found that the solid food was to be eaten deliciously for a sufficient time even when it was eaten as a menu together with another menu.

### INDUSTRIAL APPLICABILITY

The present invention provides richer dietary habits, thereby contributing to the food industry.

## Claims

1. A solid food in which a core food is coated with a fat/oil composition,
wherein either (i) the fat/oil composition contains a finely pulverized product of an edible part and an inedible part of a foodstuff containing an insoluble dietary fiber or (ii) a surface of the fat/oil composition is further coated with a finely pulverized product of an edible part and an inedible part of a foodstuff containing an insoluble dietary fiber,
wherein the inedible part is one or more selected from the group consisting of a core of corn, a seed and a calyx of paprika, a seed and guts of pumpkin, peel of beet, a stem and a leaf of broccoli, a sheath of green soybean, a calyx of tomato, a stump of spinach, a petiole base of kale, a sheath of pea, a sheath and a seed coat of broad bean, a root apex and a petiole base of carrot, and peel and ends of sweet potato,
and wherein a ratio of a total mass of a mass of the finely pulverized product of an edible part and an inedible part of a foodstuff containing an insoluble dietary fiber and a mass of the fat/oil composition to a surface area of the core food is 0.1 g or more per 100 cm², and/or a ratio of a mass of the finely pulverized product of an edible part and an inedible part of a foodstuff containing an insoluble dietary fiber to a surface area of the core food is 0.03 g or more per 100 cm².

2. The solid food according to claim 1, wherein:
(i) a dry mass ratio (inedible part)/((edible part) + (inedible part)) is 85 mass% or less; and/or
(ii) a ratio of a total dry mass of the edible part and the inedible part of the foodstuff containing an insoluble dietary fiber to a mass of all insoluble components of the finely pulverized product of the edible part and the inedible part of the foodstuff containing an insoluble dietary fiber and the fat/oil composition is 15 mass% or more.

3. The solid food according to claim 1 or 2, wherein:
(i) the edible part and the inedible part are derived from the same foodstuff containing an insoluble dietary fiber; and/or
(ii) the foodstuff containing an insoluble dietary fiber is one or more selected from the group consisting of seeds, grain, beans, vegetables, and fruits; and/or
(iii) the foodstuff containing an insoluble dietary fiber, which contains an inedible part and/or an edible part, is one or more selected from the group consisting of paprika, beet, green soybean, corn, carrot, pumpkin, pea, broad bean, sweet potato, broccoli, spinach, and kale.

4. The solid food according to any one of claims 1 to 3, wherein a dry mass of the fat/oil composition is 5 mass% or more and 65 mass% or less based on a total mass of the solid food.

5. The solid food according to any one of claims 1 to 4, wherein the fat/oil composition:
(i) comprises a pasted product of seeds; and/or
(ii) does not contain cacao butter.

6. The solid food according to any one of claims 1 to 5, wherein the core food:
(i) is a processed product of one or more selected from the group consisting of grain, beans, vegetables, fruits, and seeds; and/or
(ii) is a puffed food; and/or
(iii) is sugar coated, wherein the sugar coating is optionally made with fruit juice and/or concentrate thereof and/or dry matter thereof.

7. The solid food according to any one of claims 1 to 6, wherein the finely pulverized product of an edible part and an inedible part of a foodstuff containing an insoluble dietary fiber is a dry finely pulverized product.

8. The solid food according to claims 1 to 7, wherein the finely pulverized product:
(i) has a d90 of 600 µm or less; and/or
(ii) has a d90 of 20 µm or more.

9. The solid food according to any one of claims 1 to 8, wherein the solid food does not comprise an emulsifier as a food additive preparation.

10. The solid food according to any one of claims 1 to 9, wherein the solid food comprises two or more core foods.

11. A solid food combination comprising two or more solid foods according to any one of claims 1 to 10 combined with each other.

12. A method for manufacturing the solid food according to any one of claims 1 to 9, wherein the method is the following (A) or (B):
(A) a method comprising a step (1) of manufacturing the fat/oil composition containing a finely pulverized product of an edible part and an inedible part of a foodstuff containing an insoluble dietary fiber and a step (2) of coating a surface of a processed product of one or more selected from the group consisting of grain, beans, vegetables, fruits, and seeds as a core food with the fat/oil composition of (1) such that a ratio of a total mass of a mass of the finely pulverized product of an edible part and an inedible part of a foodstuff containing an insoluble dietary fiber and a mass of the fat/oil composition to a surface area of the core food is 0.1 g or more per 100 cm², and/or a ratio of a mass of the finely pulverized product of an edible part and an inedible part of a foodstuff containing an insoluble dietary fiber to a surface area of the core food is 0.03 g or more per 100 cm²;
(B) a method comprising a step (1) of manufacturing the fat/oil composition, a step (2) of coating a surface of a processed product of one or more selected from the group consisting of grain, beans, vegetables, fruits, and seeds as a core food with the fat/oil composition of (1) and a step (3) of coating a surface of the fat/oil composition with the finely pulverized product of an edible part and an inedible part of a foodstuff containing an insoluble dietary fiber, such that a ratio of a total mass of a mass of the finely pulverized product of an edible part and an inedible part of a foodstuff containing an insoluble dietary fiber and a mass of the fat/oil composition to a surface area of the core food is 0.1 g or more per 100 cm², and/or a ratio of a mass of the finely pulverized product of an edible part and an inedible part of a foodstuff containing an insoluble dietary fiber to a surface area of the core food is 0.03 g or more per 100 cm²,
wherein the inedible part is one or more selected from the group consisting of a core of corn, a seed and a calyx of paprika, a seed and guts of pumpkin, peel of beet, a stem and a leaf of broccoli, a sheath of green soybean, a calyx of tomato, a stump of spinach, a petiole base of kale, a sheath of pea, a sheath and a seed coat of broad bean, a root apex and a petiole base of carrot, and peel and ends of sweet potato.

13. The method according to claim 12, further comprising a step (4) of performing heating treatment at 80°C for 1 minute or more.

14. The method according to claim 12 or 13, further comprising performing drying treatment until a value of water activity decreases by 0.05 or more after the step of coating with the fat/oil composition of (1).

## Patentansprüche

1. Festes Nahrungsmittel, in dem ein Kernnahrungsmittel mit einer Fett-/ÖlZusammensetzung beschichtet ist, wobei entweder:
(i) die Fett-/Öl-Zusammensetzung ein fein pulverisiertes Produkt eines verzehrbaren Teils und eines nicht verzehrbaren Teils eines Lebensmittels enthält, das einen unlöslichen Ballaststoff enthält, oder
(ii) eine Oberfläche der Fett-/Öl-Zusammensetzung ferner mit einem fein pulverisierten Produkt eines verzehrbaren Teils und eines nicht verzehrbaren Teils eines Lebensmittels beschichtet ist, das einen unlöslichen Ballaststoff enthält,
wobei der nicht verzehrbare Teil einer oder mehrere ist/sind, ausgewählt aus der aus einem Maiskern, einem Samen und Calyx von Paprika, einem Samen und Fruchtfleisch von Kürbis, Rote-Rüben-Schale, einem Stamm und einem Blatt von Brokkoli, einer Sojabohnen-Schote, einer Calyx von Tomate, einem Stiel von Spinat, einer Blattstielbasis von Kohl, einer Erbsenschote, einer Schote und einer Samenhülle der Ackerbohne, einer Wurzelspitze und einer Blattstielbasis von Karotte und Schalen und Enden von Süßkartoffel bestehenden Gruppe,
und wobei ein Verhältnis der Gesamtmasse einer Masse des fein pulverisierten Produkts eines verzehrbaren Teils und eines nicht verzehrbaren Teils eines Lebensmittels, das einen unlöslichen Ballaststoff enthält, und einer Masse der Fett-/Öl-Zusammensetzung zu einer Oberfläche des Kernnahrungsmittels 0,1 g oder mehr pro 100 cm² beträgt und/oder ein Massenverhältnis des fein pulverisierten Produkts eines verzehrbaren Teils und eines nicht verzehrbaren Teils eines Lebensmittels, das einen unlöslichen Ballaststoff enthält, zu einer Oberfläche des Kernnahrungsmittels 0,03 g oder mehr pro 100 cm² beträgt.

2. Festes Nahrungsmittel nach Anspruch 1, wobei:
(i) ein Trockenmasseverhältnis (nicht verzehrbarer Teil)/((verzehrbarer Teil) + (nicht verzehrbarer Teil)) = 85 Massen-% oder weniger beträgt; und/oder
(ii) ein Verhältnis einer Gesamttrockenmasse des verzehrbaren Teils und des nicht verzehrbaren Teils des Lebensmittels, das einen unlöslichen Ballaststoff enthält, zu einer Masse aller unlöslichen Komponenten des fein pulverisierten Produkts des verzehrbaren Teils und des nicht verzehrbaren Teils des Lebensmittels, das einen unlöslichen Ballaststoff enthält, und der Fett-/Öl-Zusammensetzung 15 Massen-% oder mehr beträgt.

3. Festes Nahrungsmittel nach Anspruch 1 oder 2, wobei:
(i) der verzehrbare Teil und der nicht verzehrbare Teil von demselben Lebensmittel abgeleitet sind, das einen unlöslichen Ballaststoff enthält; und/oder
(ii) das Lebensmittel, das einen unlöslichen Ballaststoff enthält, eines ist oder mehrere sind, das/die aus der aus Samen, Getreide, Bohnen, Gemüse und Obst bestehenden Gruppe ausgewählt ist/sind; und/oder
(iii) das Lebensmittel, das einen unlöslichen Ballaststoff enthält, das einen nicht verzehrbaren Teil und/oder einen verzehrbaren Teil enthält, eines ist oder mehrere sind, das/die aus der aus Paprika, Roten Rüben, Grüner Sojabohne, Mais, Karotte, Kürbis, Erbse, Ackerbohne, Süßkartoffel, Brokkoli, Spinat und Kohl bestehenden Gruppe ausgewählt ist/sind.

4. Festes Nahrungsmittel nach einem der Ansprüche 1 bis 3, wobei eine Trockenmasse der Fett-/Öl-Zusammensetzung 5 Massen-% oder mehr und 65 Massen-% oder weniger, bezogen auf eine Gesamtmasse des festen Nahrungsmittels, beträgt.

5. Festes Nahrungsmittel nach einem der Ansprüche 1 bis 4, wobei die Fett-/ÖlZusammensetzung:
(i) ein pastenartiges Produkt von Samen umfasst; und/oder
(ii) keine Kakaobutter enthält.

6. Festes Nahrungsmittel nach einem der Ansprüche 1 bis 5, wobei das Kernnahrungsmittel:
(i) ein verarbeitetes Produkt von einem oder mehreren ist, das/die aus der aus Getreide, Bohnen, Gemüse, Obst und Samen bestehenden Gruppe ausgewählt ist/sind; und/oder
(ii) ein gepufftes Nahrungsmittel ist; und/oder
(iii) mit Zucker überzogen ist, wobei der Zuckerüberzug gegebenenfalls mit Fruchtsaft und/oder einem Konzentrat davon und/oder einem Trockenmaterial davon hergestellt wurde.

7. Festes Nahrungsmittel nach einem der Ansprüche 1 bis 6, wobei das fein pulverisierte Produkt eines verzehrbaren Teils und eines nicht verzehrbaren Teils eines Lebensmittels, das einen unlöslichen Ballaststoff enthält, ein trockenes, fein pulverisiertes Produkt ist.

8. Festes Nahrungsmittel nach einem der Ansprüche 1 bis 7, wobei das fein pulverisierte Produkt:
(i) einen d90 von 600 µm oder weniger aufweist; und/oder
(ii) einen d90 von 20 µm oder mehr aufweist.

9. Festes Nahrungsmittel nach einem der Ansprüche 1 bis 8, wobei das feste Nahrungsmittel keinen Emulgator als Nahrungsmittelzusatz-Präparat umfasst.

10. Festes Nahrungsmittel nach einem der Ansprüche 1 bis 9, wobei das feste Nahrungsmittel zwei oder mehr Kernnahrungsmittel umfasst.

11. Feste Nahrungsmittelkombination, umfassend zwei oder mehr feste Nahrungsmittel nach einem der Ansprüche 1 bis 10, die miteinander kombiniert sind.

12. Verfahren zur Herstellung eines festen Nahrungsmittels nach einem der Ansprüche 1 bis 9, wobei das Verfahren eines der folgenden (A) oder (B) ist:
(A) ein Verfahren, umfassend einen Schritt (1) des Herstellens der Fett-/ÖlZusammensetzung, die ein fein pulverisiertes Produkt eines verzehrbaren Teils und eines nicht verzehrbaren Teils eines Lebensmittels enthält, das einen unlöslichen Ballaststoff enthält, und einen Schritt (2) des Beschichtens einer Oberfläche eines verarbeiteten Produkts von einem oder mehreren, das/die aus der aus Getreide, Bohnen, Gemüse, Obst und Samen bestehenden Gruppe als Kernnahrungsmittel ausgewählt ist/sind, mit der Fett-/Öl-Zusammensetzung aus (1), sodass ein Verhältnis einer Gesamtmasse einer Masse des fein pulverisierten Produkts eines verzehrbaren Teils und eines nicht verzehrbaren Teils eines Lebensmittels, das einen unlöslichen Ballaststoff enthält, und einer Masse der Fett-/ÖlZusammensetzung zu einer Oberfläche des Kernnahrungsmittels 0,1 g oder mehr pro 100 cm² beträgt und/oder ein Massenverhältnis des fein pulverisierten Produkts eines verzehrbaren Teils und eines nicht verzehrbaren Teils eines Lebensmittels, das einen unlöslichen Ballaststoff enthält, zu einer Oberfläche des Kernnahrungsmittels 0,03 g oder mehr pro 100 cm² beträgt;
(B) ein Verfahren, umfassend einen Schritt (1) des Herstellens der Fett-/ÖlZusammensetzung, einen Schritt (2) des Beschichtens einer Oberfläche eines verarbeiteten Produkts von einem oder mehreren, das/die aus der aus Getreide, Bohnen, Gemüse, Obst und Samen bestehenden Gruppe als Kernnahrungsmittel ausgewählt ist/sind, mit der Fett-/Öl-Zusammensetzung aus (1) und einen Schritt (3) des Beschichtens einer Oberfläche der Fett-/Öl-Zusammensetzung mit dem fein pulverisierten Produkt eines verzehrbaren Teils und eines nicht verzehrbaren Teils eines Lebensmittels, das einen unlöslichen Ballaststoff enthält, sodass ein Verhältnis einer Gesamtmasse einer Masse des fein pulverisierten Produkts eines verzehrbaren Teils und eines nicht verzehrbaren Teils eines Lebensmittels, das einen unlöslichen Ballaststoff enthält, und einer Masse der Fett-/Öl-Zusammensetzung zu einer Oberfläche des Kernnahrungsmittels 0,1 g oder mehr pro 100 cm² beträgt und/oder ein Massenverhältnis des fein pulverisierten Produkts eines verzehrbaren Teils und eines nicht verzehrbaren Teils eines Lebensmittels, das einen unlöslichen Ballaststoff enthält, zu einer Oberfläche des Kernnahrungsmittels 0,03 g oder mehr pro 100 cm² beträgt,
wobei der nicht verzehrbare Teil einer ist oder mehrere sind, ausgewählt aus der aus einem Maiskern, einem Samen und Calyx von Paprika, einem Samen und Fruchtfleisch von Kürbis, Rote-Rüben-Schale, einem Stamm und einem Blatt von Brokkoli, einer Sojabohnen-Schote, einer Calyx von Tomate, einem Stiel von Spinat, einer Blattstielbasis von Kohl, einer Erbsenschote, einer Schote und einer Samenhülle der Ackerbohne, einer Wurzelspitze und einer Blattstielbasis von Karotte und Schalen und Enden von Süßkartoffel bestehenden Gruppe.

13. Verfahren nach Anspruch 12, das ferner einen Schritt (4) des Durchführens einer Wärmebehandlung 1 min oder länger bei 80 °C umfasst.

14. Verfahren nach Anspruch 12 oder 13, das ferner das Durchführen einer Trocknungsbehandlung umfasst, bis ein Wert der Wasseraktivität nach dem Schritt des Beschichtens mit der Fett-/Öl-Zusammensetzung aus (1) um 0,05 oder mehr abnimmt.

## Revendications

1. Aliment solide dans lequel un aliment de noyau est enrobé d'une composition de graisse/huile,
dans lequel soit (i) la composition de graisse/huile contient un produit finement pulvérisé d'une partie comestible et d'une partie non comestible d'un produit alimentaire contenant une fibre alimentaire insoluble, soit (ii) une surface de la composition de graisse/huile est en outre revêtue d'un produit finement pulvérisé d'une partie comestible et d'une partie non comestible d'un produit alimentaire contenant une fibre alimentaire insoluble,
dans lequel la partie non comestible est un ou plusieurs choisis dans le groupe constitué d'une tige de maïs, d'une graine et d'un calice de paprika, d'une graine et de tripes de citrouille, d'une écorce de betterave, d'une tige et d'une feuille de brocoli, d'une gaine de soja vert, d'un calice de tomate, d'une souche d'épinard, d'une base de pétiole de chou frisé, d'une gaine de pois, d'une gaine et d'une enveloppe de graine de fève, d'un sommet de racine et d'une base de pétiole de carotte, et d'une écorce et d'extrémités de patate douce,
et dans lequel un rapport d'une masse totale d'une masse du produit finement pulvérisé d'une partie comestible et d'une partie non comestible d'un produit alimentaire contenant une fibre alimentaire insoluble et une masse de la composition de graisse/huile à une aire de surface de l'aliment de noyau est de 0,1 g ou plus pour 100 cm², et/ou un rapport d'une masse du produit finement pulvérisé d'une partie comestible et d'une partie non comestible d'un produit alimentaire contenant une fibre alimentaire insoluble à une aire de surface de l'aliment de noyau est de 0,03 g ou plus pour 100 cm².

2. Aliment solide selon la revendication 1, dans lequel :
(i) un rapport massique sec (partie non comestible)/((partie comestible) + (partie non comestible)) est inférieur ou égal à 85 % en masse ; et/ou
(ii) un rapport d'une masse sèche totale de la partie comestible et de la partie non comestible du produit alimentaire contenant une fibre alimentaire insoluble à une masse de tous les composants insolubles du produit finement pulvérisé de la partie comestible et de la partie non comestible du produit alimentaire contenant une fibre alimentaire insoluble et la composition de graisse/huile est de 15 % en masse ou plus.

3. Aliment solide selon la revendication 1 ou 2, dans lequel :
(i) la partie comestible et la partie non comestible sont dérivées du même produit alimentaire contenant une fibre alimentaire insoluble ; et/ou
(ii) le produit alimentaire contenant une fibre alimentaire insoluble est un ou plusieurs choisis dans le groupe comprenant des graines, des grains, des haricots, des légumes et des fruits ; et/ou
(iii) le produit alimentaire contenant une fibre alimentaire insoluble, qui contient une partie non comestible et/ou une partie comestible, est un ou plusieurs choisis dans le groupe comprenant le paprika, la betterave, le soja vert, le maïs, la carotte, la citrouille, le pois, la fève, la patate douce, le brocoli, les épinards et le chou frisé.

4. Aliment solide selon l'une quelconque des revendications 1 à 3, dans lequel une masse sèche de la composition de graisse/huile est de 5 % en masse ou plus et de 65 % en masse ou moins sur la base d'une masse totale de l'aliment solide.

5. Aliment solide selon l'une quelconque des revendications 1 à 4, dans lequel la composition de graisse/huile :
(i) comprend un produit pâteux de graines ; et/ou
(ii) ne contient pas de beurre de cacao.

6. Aliment solide selon l'une quelconque des revendications 1 à 5, dans lequel l'aliment de noyau :
(i) est un produit transformé d'un ou de plusieurs choisis dans le groupe comprenant des grains, des haricots, des légumes, des fruits et des graines ; et/ou
(ii) est un aliment soufflé ;
(iii) est enrobé de sucre, dans lequel l'enrobage de sucre est éventuellement fabriqué avec du jus de fruit et/ou un concentré de celui-ci et/ou une matière sèche de celui-ci.

7. Aliment solide selon l'une quelconque des revendications 1 à 6, dans lequel le produit finement pulvérisé d'une partie comestible et d'une partie non comestible d'un produit alimentaire contenant une fibre alimentaire insoluble est un produit sec finement pulvérisé.

8. Aliment solide selon les revendications 1 à 7, dans lequel le produit finement pulvérisé
(i) a un d90 inférieur ou égal à 600 µm ; et/ou
(ii) présente un d90 égal ou supérieur à 20 µm.

9. Aliment solide selon l'une quelconque des revendications 1 à 8, dans lequel l'aliment solide ne comprend pas d'émulsifiant en tant que préparation d'additif alimentaire.

10. Aliment solide selon l'une quelconque des revendications 1 à 9, dans lequel l'aliment solide comprend deux ou plus de deux aliments de noyau.

11. Combinaison d'aliments solides comprenant deux ou plus de deux aliments solides selon l'une quelconque des revendications 1 à 10 combinés mutuellement.

12. Procédé de fabrication de l'aliment solide selon l'une quelconque des revendications 1 à 9, dans lequel le procédé est le (A) ou (B) suivant :
(A) un procédé comprenant une étape (1) de fabrication de la composition de graisse/huile contenant un produit finement pulvérisé d'une partie comestible et d'une partie non comestible d'un produit alimentaire contenant une fibre alimentaire insoluble et une étape (2) d'enrobage d'une surface d'un produit traité d'un ou de plusieurs choisis dans le groupe comprenant des grains, des haricots, des légumes, des fruits et des graines en tant qu'aliment de noyau avec la composition de graisse/huile de (1) de telle sorte qu'un rapport d'une masse totale d'une masse du produit finement pulvérisé d'une partie comestible et d'une partie non comestible d'un produit alimentaire contenant une fibre alimentaire insoluble et d'une masse de la composition de graisse/huile à une aire de surface de l'aliment de noyau est de 0,1 g ou plus pour 100 cm², et/ou un rapport d'une masse du produit finement pulvérisé d'une partie comestible et d'une partie non comestible d'un aliment contenant une fibre alimentaire insoluble à une aire de surface de l'aliment de noyau est de 0,03 g ou plus pour 100 cm²;
(B) un procédé comprenant une étape (1) de fabrication de la composition de graisse/huile, une étape (2) d'enrobage d'une surface d'un produit traité d'un ou de plusieurs sélectionnés dans le groupe comprenant des grains, des haricots, des légumes, des fruits et des graines en tant qu'aliment de noyau avec la composition de graisse/huile de (1) et une étape (3) d'enrobage d'une surface de la composition de graisse/huile avec le produit finement pulvérisé d'une partie comestible et d'une partie non comestible d'un produit alimentaire contenant une fibre alimentaire insoluble, de telle sorte qu'un rapport d'une masse totale d'une masse du produit finement pulvérisé d'une partie comestible et d'une partie non comestible d'un produit alimentaire contenant une fibre alimentaire insoluble et d'une masse de la composition de graisse/huile à une aire de surface de l'aliment de noyau est de 0,1 g ou plus pour 100 cm², et/ou un rapport d'une masse du produit finement pulvérisé d'une partie comestible et d'une partie non comestible d'un produit alimentaire contenant une fibre alimentaire insoluble à une aire surface de l'aliment de noyau est de 0,03 g ou plus par 100 cm²,
dans lequel la partie non comestible est un ou plusieurs choisis dans le groupe constitué d'une tige de maïs, d'une graine et d'un calice de paprika, d'une graine et de tripes de citrouille, d'une écorce de betterave, d'une tige et d'une feuille de brocoli, d'une gaine de soja vert, d'un calice de tomate, d'une souche d'épinard, d'une base de pétiole de chou frisé, d'une gaine de pois, d'une gaine et d'une enveloppe de graine de fève, d'un sommet de racine et d'une base de pétiole de carotte, et d'une écorce et d'extrémités de patate douce,

13. Procédé selon la revendication 12, comprenant en outre une étape (4) de réalisation d'un traitement de chauffage à 80°C pendant 1 minute ou plus.

14. Procédé selon la revendication 12 ou 13, comprenant en outre l'exécution d'un traitement de séchage jusqu'à ce qu'une valeur de l'activité de l'eau diminue de 0,05 ou plus après l'étape d'enrobage avec la composition de graisse/huile de (1).
